(19) Europäisches Patentamt / European Patent Office / Office européen des brevets

(11) **EP 2 871 748 A1**

(12) **EUROPEAN PATENT APPLICATION**
published in accordance with Art. 153(4) EPC

(43) Date of publication:
**13.05.2015 Bulletin 2015/20**

(51) Int Cl.:
*H02J 7/10* (2006.01)   *B60L 11/18* (2006.01)
*H02J 3/00* (2006.01)   *H02J 7/00* (2006.01)
*H02J 7/02* (2006.01)   *H02J 13/00* (2006.01)

(21) Application number: **13813115.6**

(22) Date of filing: **17.04.2013**

(86) International application number:
**PCT/JP2013/061357**

(87) International publication number:
**WO 2014/006953 (09.01.2014 Gazette 2014/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.07.2012 JP 2012150453**

(71) Applicant: **NEC Corporation
Tokyo 108-8001 (JP)**

(72) Inventor: **SHIZUNO, Takayuki
Tokyo 108-8001 (JP)**

(74) Representative: **Vossius & Partner
Patentanwälte Rechtsanwälte mbB
Siebertstrasse 3
81675 München (DE)**

(54) **CHARGING SYSTEM CONTROL DEVICE, PROGRAM, AND CONTROL METHOD**

(57)     A charging system control apparatus (2000) includes a control instruction transmission unit (2020), a charging characteristic information acquisition unit (2040), and an area information acquisition unit (2060). The area information acquisition unit (2060) acquires area information indicating the time dependency of electrical power being able to be supplied to the a charging system (3000) from an external power supply (5000), and the charging characteristic information acquisition unit (2040) acquires charging characteristic information having one or more charging characteristic functions indicating the time variation of electrical power required to charge an electric vehicle (6000). The area information is determined by an area where the external power supply (5000) is located. The control instruction transmission unit (2020) selects one charging characteristic function on the basis of the area information, and sends an instruction to the charging system (3000) on the basis of the selection.

FIG. 1

**Description**

TECHNICAL FIELD

The present invention relates to a charging system control apparatus, a program, and a control method.

BACKGROUND ART

In recent years, electric vehicles running with an electric motor have been developed. The electric vehicles have a battery mounted therein, and run with the electrical power stored in the battery. When the amount of the stored power in the battery is reduced due to running, it is necessary to charge the battery using a charging system installed in urban areas or a garage at home, and the like.

The battery mounted in the electric vehicles has a large capacity. For this reason, even though charging is performed using a high power charger called a fast charger, it takes several tens of minutes to complete the charging. Therefore, it is considered that a user waits at another place until the charging completes, or the like in many cases. Thus, it is required that a charging system has a function of predicting a charging completion time and notifying a user of the charging completion time.

For example, a technique disclosed in Patent Document 1 is a technique of creating a charging schedule performed by a charging system on the basis of information on the state of the degradation or the remaining capacity of a battery included in a charging vehicle and on the basis of information on a battery stored in an external server, and notifying a user of a charging completion time.

A technique disclosed in Patent Document 2 is a technique of calculating a charging completion time and notifying a user of the charging completion time when the type, the remaining amount of the charged power and the desired amount of the charged power of a battery are input into a charging system.

RELATED DOCUMENT

PATENT DOCUMENTS

[Patent Document 1] Japanese Unexamined Patent Publication No. 2006-74868
[Patent Document 2] Japanese Unexamined Patent Publication No. 2011-24335

DISCLOSURE OF THE INVENTION

It is possible that the electrical power supplied from an external power supply to a charging system varies with time due to, for example, a command from a system that manages energy of each area. For this reason, it is necessary to predict a charging completion time taking the variation into account.

An object of the present invention is to provide a technique capable of accurately predict a charging completion time in a charging system in consideration of the time dependency of the electrical power supplied from an external power supply, which time dependency is determined by an area where the external power supply is located.

According to the present invention, there is provided a charging system control apparatus that controls a charging system for charging an electric vehicle driven by electrical power. The charging system includes a control unit and a charging unit, and is connected to the charging system control apparatus through a communication line. The control unit controls the charging unit in accordance with an instruction which is received from the charging system control apparatus. The charging unit transmits electrical power, which the charging system receives from an external power supply, to the electric vehicle in accordance with control by the control unit. The charging system control apparatus includes a charging characteristic information acquisition unit, an area information acquisition unit, and a control instruction transmission unit. The charging characteristic information acquisition unit acquires charging characteristic information including at least one or more charging characteristic functions indicating a time variation of an amount of electrical power per unit time with which the electric vehicle is charged, on the basis of a type of the electric vehicle and a total amount of electrical power required to charge the electric vehicle. The area information acquisition unit acquires area information including a maximum received power function indicating time dependency of electrical power being able to be supplied from the external power supply, the area information being determined by an area where the external power supply is located. The control instruction transmission unit performs: acquiring the charging characteristic information from the charging characteristic information acquisition unit and acquires the area information from the area information acquisition unit; setting the maximum received power function as a maximum available power function indicating a time variation of electrical power with which the charging unit is able to charge the electric vehicle, on the basis of the area information; selecting one charging characteristic function which is constantly equal to or less than the maximum available power function on the basis of the charging characteristic information and the area information; and sending the instruction to the control unit on the basis of the charging characteristic function.

According to the present invention, there is provided a program causing a computer to have a function of operating as the charging system control apparatus according to the present invention. The program causes the computer to have a function of each function configuration unit included in the charging system control apparatus according to the present invention.

According to the present invention, there is provided a control method which is executed by a computer that controls a charging system for charging an electric vehicle driven by electrical power. The charging system includes a control unit and a charging unit, and is connected to the computer through a communication line. The control unit controls the charging unit in accordance with an instruction which is received from the computer. The charging unit transmits electrical power, which the charging system receives from an external power supply, to the electric vehicle in accordance with control by the control unit. The control method includes: a step of acquiring charging characteristic information including at least one or more charging characteristic functions indicating a time variation of an amount of electrical power per unit time with which the electric vehicle is charged, on the basis of a type of the electric vehicle and a total amount of electrical power required to charge the electric vehicle, a step of acquiring area information including a maximum received power function indicating time dependency of electrical power being able to be supplied from the external power supply, the area information being determined by an area where the external power supply is located, a step of setting the maximum received power function as a maximum available power function indicating a time variation of electrical power with which the charging unit is able to charge the electric vehicle, on the basis of the area information, a step of selecting one charging characteristic function which is constantly equal to or less than the maximum available power function on the basis of the charging characteristic information and the area information, and a step of sending the instruction to the control unit on the basis of the charging characteristic function.

According to the present invention, in a charging system, a technique in which a charging completion time is accurately predicted is provided in consideration of the time dependency of power supplied from an external power supply which is determined based on area where the external power supply is located.

BRIEF DESCRIPTION OF THE DRAWINGS

The above-mentioned objects, other objects, features and advantages will be made clearer from the preferred Exemplary Embodiments described below, and the following accompanying drawings.
FIG. 1 is a block diagram illustrating a charging system control apparatus according to Exemplary Embodiment 1 along with the usage environment thereof.
FIG. 2 is a diagram illustrating specific examples of charging characteristic functions.
FIG. 3 is a diagram illustrating images of comparison processes of a maximum available power function with the charging characteristic functions.
FIG. 4 is a diagram illustrating a configuration of a maximum received power table.
FIG. 5 is a diagram illustrating a configuration of a charging characteristic table.
FIG. 6 is a diagram illustrating a configuration of a received power table.
FIG. 7 is a flow chart illustrating the entire flow of control of a charging system by the charging system control apparatus.
FIG. 8 is a flow chart illustrating a flow of a creation process of the operation plan of a power device according to Exemplary Embodiment 1.
FIG. 9 is a block diagram illustrating a charging system control apparatus according to Exemplary Embodiment 2 along with the usage environment thereof.
FIG. 10 is a diagram illustrating a configuration of a maximum battery power table.
FIG. 11 is a diagram illustrating an image of a method of calculating a charging and discharging power function.
FIG. 12 is a diagram illustrating a configuration of a charging and discharging power table.
FIG. 13 is a flow chart illustrating a flow of a creation process of the operation plan of a power device according to Exemplary Embodiment 2.
FIG. 14 is a block diagram illustrating a charging system control apparatus according to Exemplary Embodiment 3 along with the usage environment thereof.
FIG. 15 is a block diagram illustrating a charging system control apparatus according to Exemplary Embodiment 4 along with the usage environment thereof.
FIG. 16 is a flow chart illustrating a flow of a creation process of the operation plan of a power device according to Exemplary Embodiment 5.

FIG. 17 is a block diagram illustrating a charging system control apparatus according to Exemplary Embodiment 6 along with the usage environment thereof.

FIG. 18 is a flow chart illustrating a flow of a creation process of the operation plan of a power device according to Exemplary Embodiment 6.

FIG. 19 is a flow chart illustrating a flow of a change process of a charging characteristic function according to Exemplary Embodiment 8.

FIG. 20 is a diagram illustrating a configuration of a charging and discharging table for each charging unit.

FIG. 21 is a diagram illustrating a configuration of a distribution unit - charging unit power transmission table.

FIG. 22 is a block diagram illustrating a flow of power when alternating-current power received by a distribution unit is distributed as it is, in a charging system according to Exemplary Embodiment 2.

FIG. 23 is a block diagram illustrating a flow of power when alternating-current power received by the distribution unit is converted into direct-current power and then is distributed, in the charging system according to Exemplary Embodiment 2.

DESCRIPTION OF EXEMPLARY EMBODIMENTS

Hereinafter, Exemplary Embodiments of the present invention will be described with reference to the accompanying drawings. In all the drawings, like elements are referenced by like reference numerals and the descriptions thereof will not be repeated.

Meanwhile, in the following description, each component of each apparatus represents a function-based block rather than a hardware-based configuration. Each component of each apparatus is embodied by any combination of hardware and software, based on a CPU, a memory, a program loaded into the memory for implementing the components of the drawing, storage media such as a hard disk which stores the program, and an interface for network connection of any computers. Implementing methods and apparatus thereof may be modified in various ways.

[Exemplary Embodiment 1]

<Outline of Configuration>

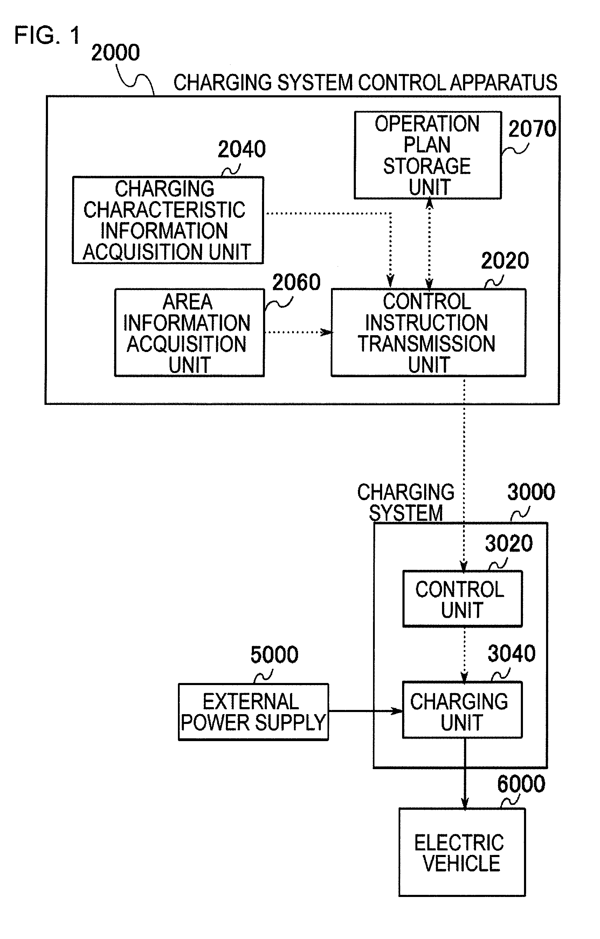

FIG. 1 is a diagram illustrating a charging system control apparatus 2000 according to Exemplary Embodiment 1 along with the usage environment thereof. The charging system control apparatus 2000 controls a charging system 3000. The charging system 3000 charges an electric vehicle 6000 using electrical power received from an external power supply 5000 in accordance with the control of the charging system control apparatus 2000. Here, the arrow of a solid line indicates a flow of electrical power, and the arrow of a dotted line indicates a flow of information.

The charging system control apparatus 2000 includes a control instruction transmission unit 2020, a charging characteristic information acquisition unit 2040, and an area information acquisition unit 2060. The area information acquisition unit 2060 acquires area information including a maximum received power function that indicates the time dependency of the electrical power being able to be supplied to the charging system 3000 by the external power supply 5000. The area information is determined based on the area where the external power supply 5000 is located. The charging characteristic information acquisition unit 2040 acquires charging characteristic information including one or more charging characteristic functions indicating the time variation of charging power required for the charging of the electric vehicle 6000 from the charging start of the electric vehicle 6000 to the charging termination thereof.

The control instruction transmission unit 2020 selects one function from the plurality of charging characteristic functions based on the area information, and controls the charging system 3000 so that the charging system 3000 transmits electrical power to the electric vehicle 6000 in accordance with the selected charging characteristic function. Specifically, the unit selects one charging characteristic function that indicates power values constantly equal to or less than the maximum received power function, from the plurality of charging characteristic functions. A control instruction is sent to the charging system 3000 in accordance with the selected charging characteristic function, and the charging system 3000 receives electrical power the magnitude of which is based on the charging characteristic function from the external power supply 5000.

The charging system 3000 includes a control unit 3020 and a charging unit 3040. The control unit 3020 receives the control instruction from the control instruction transmission unit 2020, and controls the electrical power, which the charging system 3040 receives from the external power supply 5000, in accordance with the received control instruction. The charging unit 3040 transmits the received electrical power to the electric vehicle 6000, and charges the electric vehicle 6000. In this manner, a charging completion prediction time is a charging completion time in the charging characteristic function.

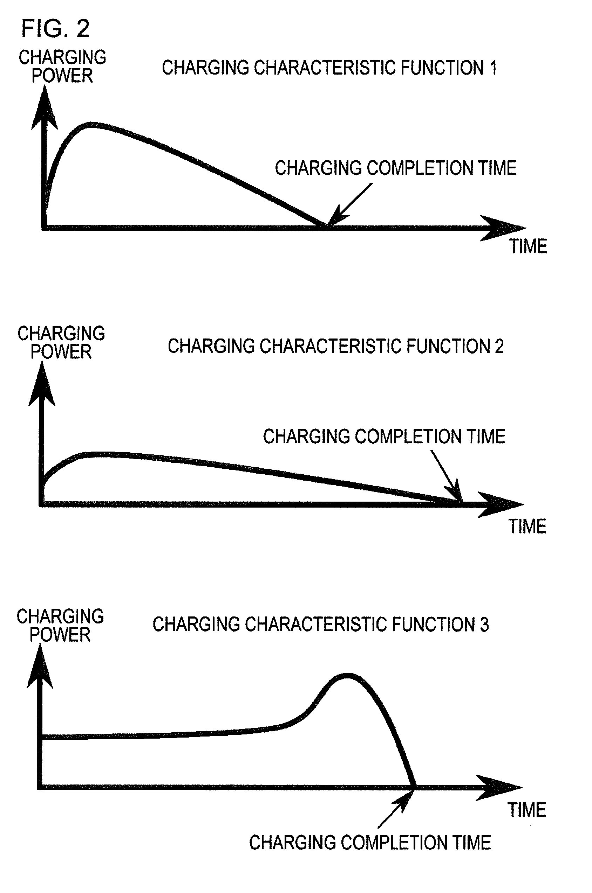

Examples of the charging characteristic functions are shown in FIG. 2. There are various charging characteristic functions such as a charging characteristic function 1 in which large electrical power is required in the former half of a charging period, a charging characteristic function 2 in which charging power is constantly small, and a charging characteristic function 3 in which charging power becomes larger in the latter half of a charging period, and the required times for charging are different from each other.

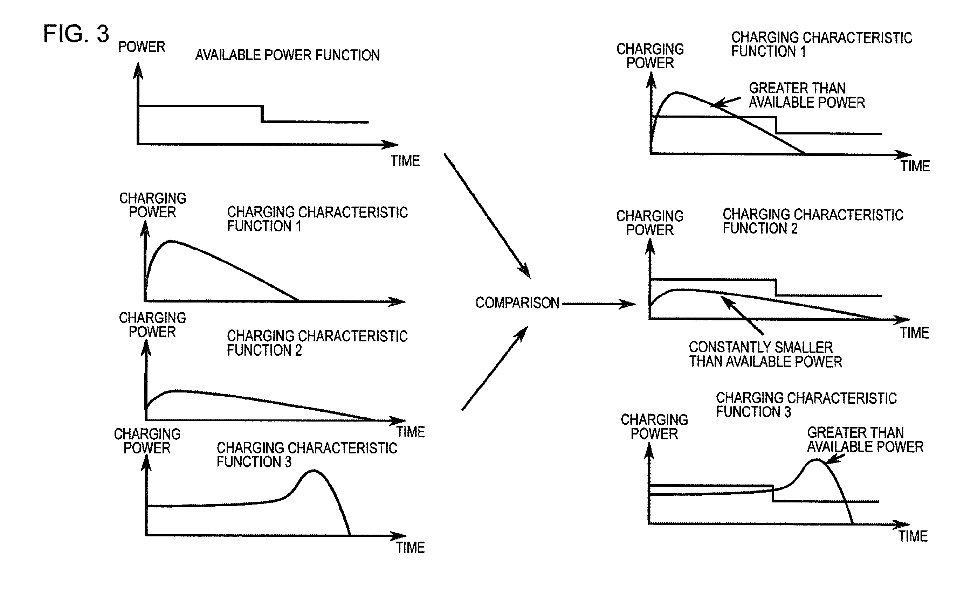

FIG.3 shows an image of processes of selecting the charging characteristic function. A graph on the upper left of FIG. 3 is a maximum received power function which is obtained from the area information. Other graphs on the left side of FIG. 3 are charging characteristic functions included in the charging characteristic information. The right side of Fig. 3 shows the results of comparing the functions with each other. As a result of the comparison, in the charging characteristic function 2, a power value is constantly equal to or less than the maximum received power function. For this reason, when the electric vehicle 6000 is charged in accordance with the charging characteristic function 2, electrical power required for the charging is constantly equal to or less than electrical power which is supplied from the external power supply 5000, and thus the electric vehicle 6000 can be charged with the electrical power which is supplied from the external power supply 5000. On the other hand, the charging characteristic function 1 becomes larger than the maximum received power function in the former half of a charging period, and the charging characteristic function 3 becomes larger than the maximum received power function in the latter half of a charging period. Therefore, when the electric vehicle 6000 is charged using the two charging characteristic functions, there is a shortage of the electrical power during the charging. Therefore, in this example, the control instruction transmission unit 2020 selects the charging characteristic function 2 from these three charging characteristic functions.

As stated above, the charging system control apparatus 2000 acquires the time dependency of electrical power being able to be supplied from the external power supply 5000 which is determined based on the area where the external power supply 5000 is located, and selects a charging characteristic function of which the power value is constantly equal to or less than the electrical power being able to be supplied from the external power supply 5000. The charging system control apparatus 2000 controls the charging system 3000, and transmits electrical power in accordance with the selected charging characteristic function to the electric vehicle 6000. In this manner, the charging system control apparatus 2000 can accurately predict a charging completion time by performing charging in consideration of the area information.

Hereinafter, the charging system control apparatus 2000 according to Exemplary Embodiment 1, the configuration of the usage environment, and the operations thereof will be described in detail.

<Details of Configuration>

The charging system control apparatus 2000 includes an operation plan storage unit 2070. The control instruction transmission unit 2020 controls the charging system 3000 based on the selected charging characteristic function from the start of charging to the termination thereof. Consequently, the control instruction transmission unit 2020 creates a power device operation plan indicating a plan for controlling the charging system 3000 based on the selected charging characteristic function, and stores the plan in the operation plan storage unit 2070. During a charging period, the charging system 3000 is controlled with referring to the power device operation plan stored in the operation plan storage unit 2070,.

The control instruction transmission unit 2020 and the control unit 3020 are connected to each other in a communicable fashion. The control instruction transmission unit 2020 and the control unit 3020 may be connected to each other through a wired communication line, may be connected to each other through a wireless communication line, and may be connected to each other through a communication network having a wired or wireless communication line.

The charging system 3000 may receive alternating-current power from the external power supply 5000, and may receive direct-current power therefrom. When alternating-current power is received from the external power supply 5000, for example, the charging unit 3040 has an AC/DC converter, and converts the electrical power received from the external power supply 5000 into direct-current power having a necessary magnitude. When direct-current power is received from the external power supply 5000, for example, the charging unit 3040 has a DC/DC converter, and converts the received direct-current power into direct-current power having a necessary magnitude.

<Details of Area Information>

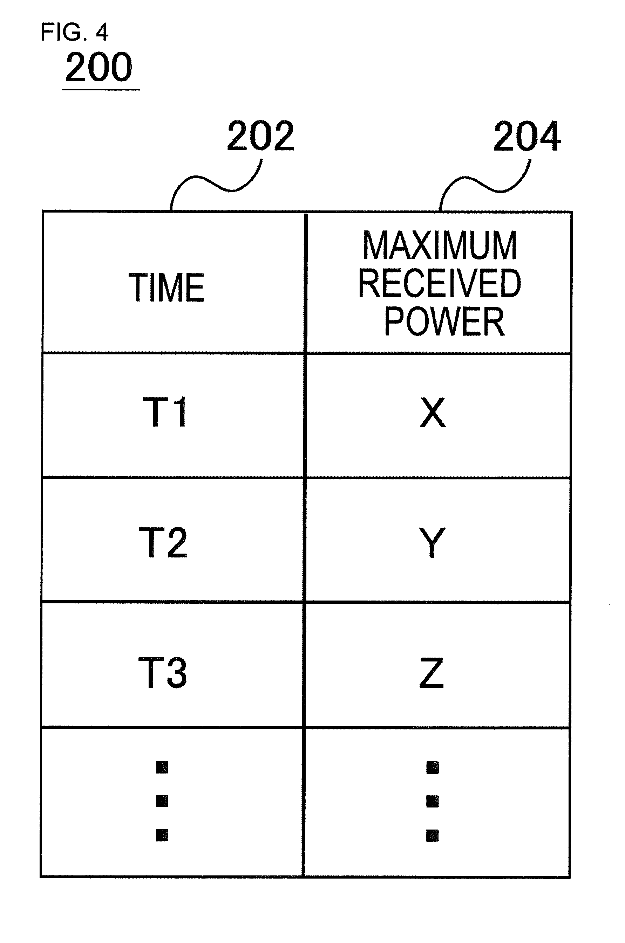

The maximum received power function included in the area information is represented as, for example, a maximum received power table 200 shown in FIG. 4. The maximum received power table 200 is a table in which the association between time and electrical power in the maximum received power function is represented in a list form. The maximum received power table includes, for example, time 202 and maximum received power 204. The maximum received power 204 indicates the electrical power being able to be supplied from the external power supply 5000 to the charging unit 3040 for each time 202.

<Details of Charging Characteristic Information>

The charging characteristic function included in the charging characteristic information is a function indicating the time variation of the amount of electrical power with which the electric vehicle 6000 is required to be charged per unit time from the charging start of the electric vehicle 6000 to the completion thereof. The electric vehicle 6000 has characteristics peculiar to a vehicle type in terms of the total amount of electrical power required for charging (hereinafter, referred to as the required power amount), charging electrical power, and a charging completion time, and the charging characteristic function is determined thereby. The charging characteristic function depends on the implementation of an internal battery or a charging circuit of the electric vehicle 6000. In addition, there exists a plurality of charging characteristic functions for each vehicle type, and the electric vehicle 6000 can be charged by transmitting electrical power to the electric vehicle 6000 in accordance with any of the charging characteristic functions. However, charging characteristic functions being able to be used in charging may be restricted due to the magnitude of the required power amount, the restriction in available electrical power, external factors such as air temperature, and the like. Consequently, the charging characteristic information acquisition unit 2040 acquires a charging characteristic function, which meets a condition such as the required power amount within one or more charging characteristic functions corresponding to the electric vehicle 6000, as the charging characteristic information.

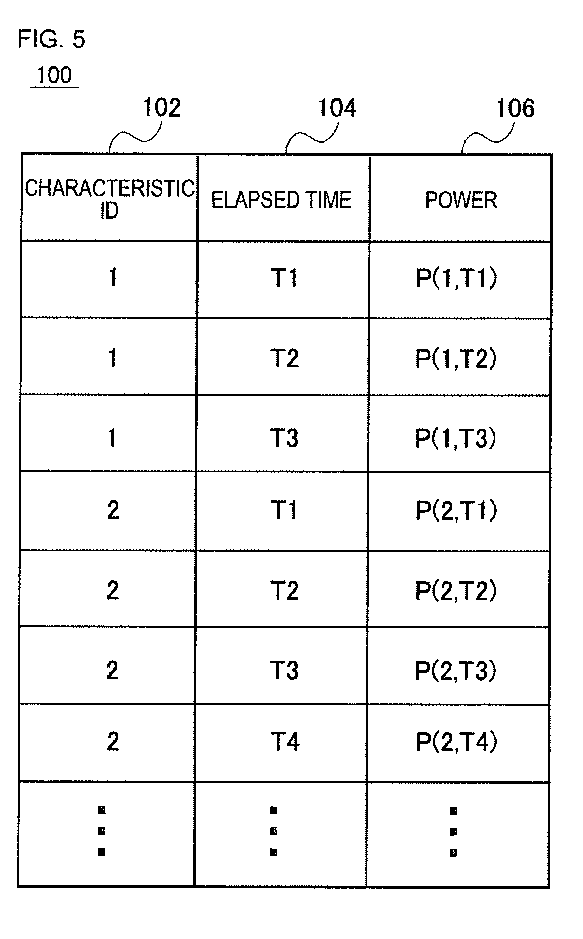

The charging characteristic information has, for example, a charging characteristic information table 100 shown in FIG. 5. The charging characteristic information table 100 is a table in which an association between time and electrical power in each charging characteristic function is represented in a list form. The charging characteristic information table 100 includes characteristic ID 102, elapsed time 104, and power 106, for example. The characteristic ID 102 is an ID of each charging characteristic function. For each charging characteristic function, the power 106 represents electrical power required for charging at the time represented by the elapsed time 104.

<Details of Power Device Operation Plan>

The control instruction transmission unit 2020 creates a power device operation plan on the basis of the selected charging characteristic function. Specifically, the power device operation plan has a received power function indicating the time variation of electrical power which is received from the external power supply 5000 by the charging unit 3040. In the present Exemplary Embodiment, since the entirety of the received electrical power is transmitted to the electric vehicle 6000, the selected charging characteristic function is used as a received power function as it is.

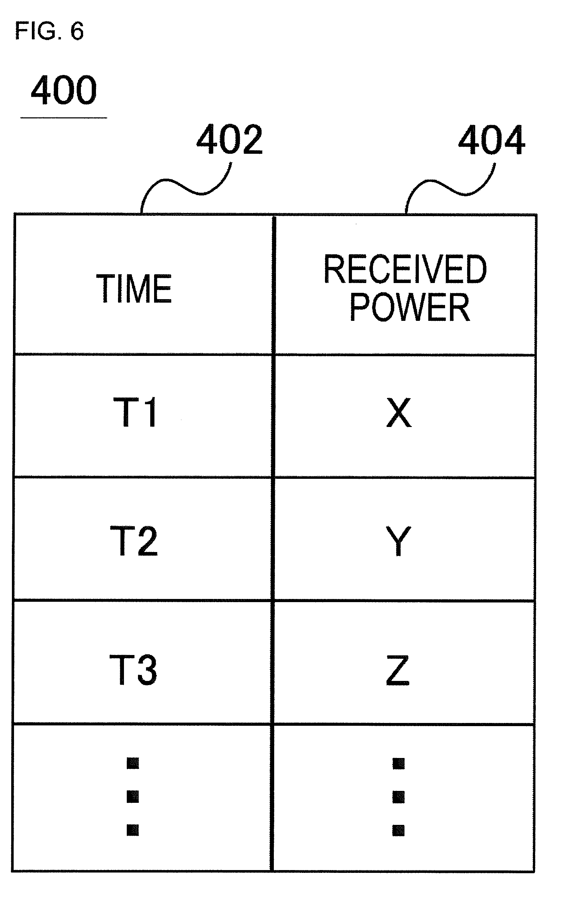

The above received power function is represented as, for example, a received power table 400 shown in FIG. 6. The received power table 400 is a table in which the change of time and electrical power in the received power function is represented in a list form. The received power table includes time 402 and received power 404 indicating received electrical power at each time, for example.

<Entire Control Flow in Charging System Control Apparatus 2000>

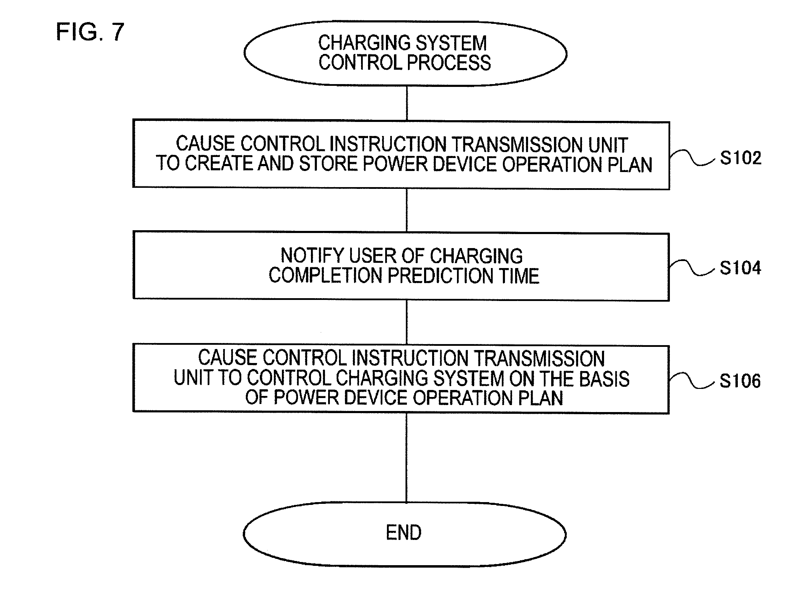

FIG. 7 illustrates the entire flow of a process in which the charging system control apparatus 2000 controls the charging system 3000.

First, in step S102, the control instruction transmission unit 2020 creates a power device operation plan, and stores the plan in the operation plan storage unit 2070. The details of the flow of this operation will be described later.

Next, in step S104, a user is notified of a charging completion scheduled time which is determined by the power device operation plan. There are various methods of notifying a user of a charging completion scheduled time. For example, there are a method of installing a display device in the charging system control apparatus 2000 to display a charging completion time, a method of installing a display device in the charging system 3000 to display a charging completion time, a method of performing data communication with a vehicle to display the resultant to a display device included in a car navigation system or the like of a vehicle, a method of performing data communication with a terminal such as a user's cellular phone to display the resultant on these display devices, and the like.

Next, in step S106, the control instruction transmission unit 2020 controls the charging system 3000 on the basis of the above power device operation plan, and charges the electric vehicle 6000.

<Creation Process of Power Device Operation Plan in Control Instruction Transmission Unit 2020>

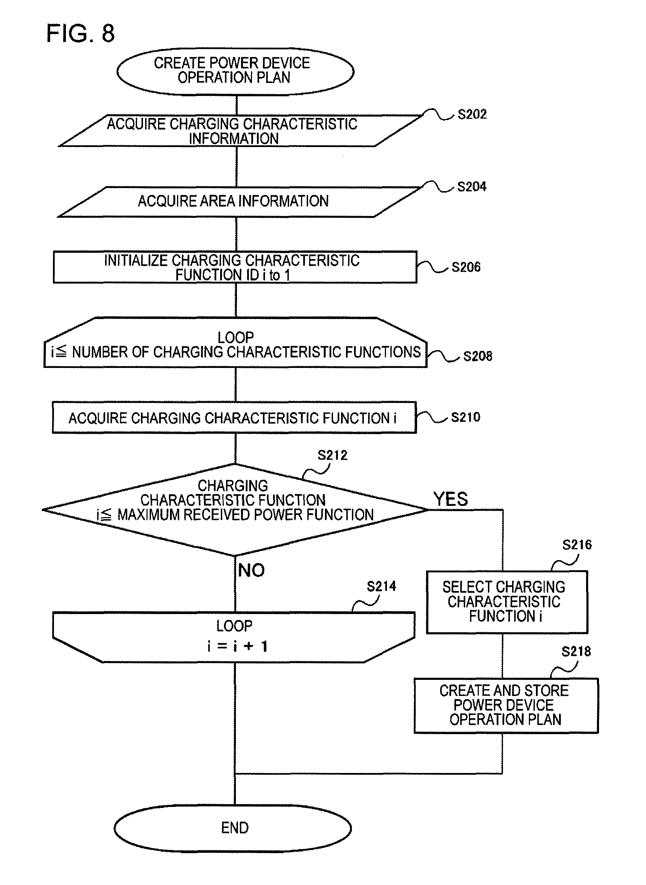

FIG. 8 illustrates a flow of a creation process of a power device operation plan which is performed by the control instruction transmission unit 2020 in step S102 of FIG. 7.

First, in step S202, the control instruction transmission unit 2020 acquires charging characteristic information from the charging characteristic information acquisition unit 2040. There are various methods with which the charging characteristic information acquisition unit 2040 acquires the charging characteristic information. For example, there are a method in which it is acquired by receiving the vehicle type of the electric vehicle 6000 and an input indicating the required power amount, and accessing a database storing the charging characteristic information on the basis thereof, a method in which it is acquired by being manually input by an administrator of the charging system control apparatus 2000 on the basis of the vehicle type or the required power amount, and the like. In addition, the information about the vehicle type or the required power amount may be automatically acquired from the electric vehicle 6000.

Next, in step S204, the control instruction transmission unit 2020 acquires the area information from the area information acquisition unit 2060. There are various methods with which the area information acquisition unit 2060 acquires the area information. For example, there are a method in which it is acquired by accessing a management server that manages the power status of an area , a method in which it is acquired by receiving a manual input by an administrator of the charging system 3000, and the like. In addition, the information obtained from the area information is not limited to only the maximum received power function. For example, the time dependency of a power price may be acquired as the area information. In this case, for example, the maximum received power function is calculated on the basis of a fluctuation in the power price.

Next, in S206, i is initialized to 1, which i indicates the ID of the charging characteristic function and is acquired from the charging characteristic information table 100. Hereinafter, the charging characteristic function the ID of which is i is represented as a charging characteristic function i.

Steps S208 to S214 are loop processes which are performed for each charging characteristic function i. First, in step S208, it is determined whether i is equal to or less than the number of charging characteristic functions included in the charging characteristic information table 100. When i is equal to or less than the number of charging characteristic functions, the process proceeds to step S210. When i is larger than the number of charging characteristic functions, the processes of all the charging characteristic function i has been finished, and thus the loop processes are terminated.

In step S210, the charging characteristic function i is acquired from the charging characteristic information table 100. Specifically, all the records in the charging characteristic information table 100 indicating i as the characteristic ID 102 are acquired.

In step S212, it is determined whether the charging characteristic function i is constantly equal to or less than the maximum received power function. Specifically, for all the records acquired in step S210, it is determined whether the power 106 is equal to or less than the power value of the maximum received power function. When the charging characteristic function i is constantly equal to or less than the maximum received power function, the process proceeds to step S216. On the other hand, when the power 106 is larger than the maximum received power function in any of the records, the process proceeds to step S214. Step S214 is a terminal of the loop process beginning with step S208, and the process returns to step S208 after increasing i by 1.

In step S216, the charging characteristic function i is selected as the charging characteristic function in order to use for charging the electric vehicle 6000. In step S218, a power device operation plan is created on the basis of the above charging characteristic function i. Specifically, in the present Exemplary Embodiment, the above charging characteristic function i is used as a received power function indicating the time variation of the electrical power which is received from the external power supply 5000 with the charging unit 3040. The above received power function is stored in the operation plan storage unit 2070 as the power device operation plan.

As stated above, a charging characteristic function is selected by repeating the loop processes from step S208 to step S214, and the power device operation plan is created on the basis of the selected charging characteristic function.

A case in which the creation process of the power device operation plan is terminated without going through step S216 and step S218 represents that the electric vehicle 6000 is not able to be charged with electrical power which is capable of being transmitted from the charging system 3000 to the electric vehicle 6000. There are various processes which are performed in that case. For example, a process of notifying a user of the charging system 3000 or an administrator of the charging system control apparatus 2000 of an error, and the like are considered.

<Control of Charging Unit 3040 by Control Unit 3020>

The control unit 3020 controls the charging unit 3040 in accordance with control that the control instruction transmission unit 2020 performs in step S106. An example of a specific method is as follows. The control instruction transmission unit 2020 transmits a value of the received power 404 included in each record to the control unit 3020, at the time indicated in each record of the received power table 400 stored in the operation plan storage unit 2070. The control unit 3020 controls the charging unit 3040 so that the charging unit 3040 receives electrical power having a magnitude shown by the received power 404 from the external power supply 5000.

The control instruction transmission unit 2020 may collectively send a plurality of records stored in the received power table 400 to the charging unit 3040. In this case, the control unit 3020 controls the above charging unit 3040 at the time indicated in each record of the received power table 400.

<Operational Advantages>

With the above configuration, according to the present Exemplary Embodiment, the charging system control apparatus 2000 acquires the time dependency of the electrical power supplied from external power supply 5000 which is determined by the area where the external power supply 5000 is located, selects a charging characteristic function of which the power value is constantly equal to or less than the electrical power being able to be supplied from the external power supply 5000, and charges the electric vehicle 6000 on the basis of this charging characteristic function, thereby making it possible to accurately predict a charging completion time.

[Exemplary Embodiment 2]

<Outline>

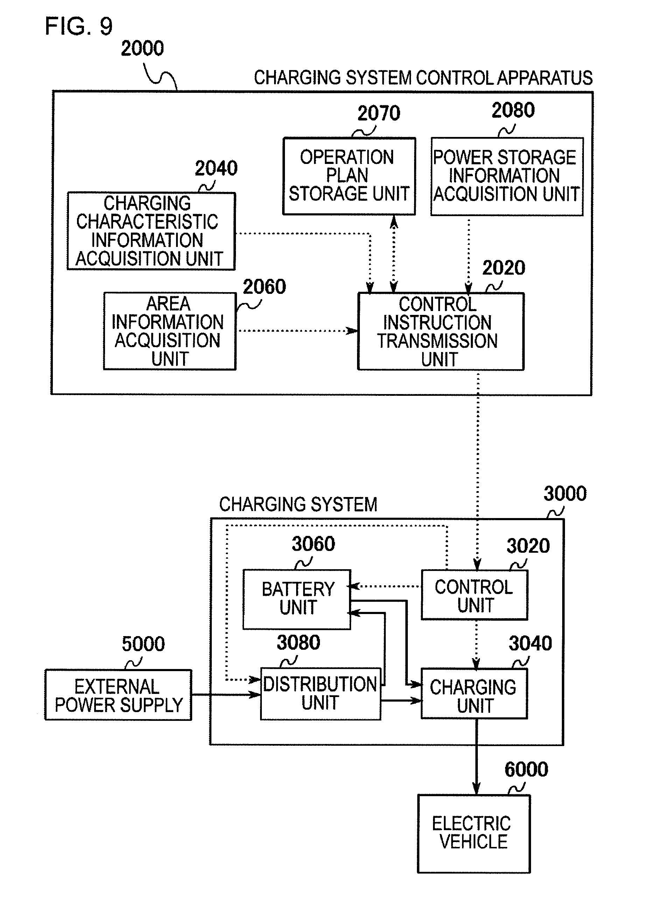

FIG. 9 is a diagram illustrating a charging system control apparatus 2000 according to Exemplary Embodiment 2 along with the usage environment thereof. Here, in FIG. 9, when function blocks having the same numerals and signs as in FIG. 1 are present, the above function blocks are assumed to have the same functions as the function blocks of FIG. 1, except for a case where a particular description will be given, and thus the description thereof will not be repeated.

A charging system 3000 according to Exemplary Embodiment 2 includes a battery unit 3060 and a distribution unit 3080. The distribution unit 3080 transmits electrical power to the charging unit 3040 and the battery unit 3060 in accordance with control performed by the control unit 3020. The battery unit 3060 discharges stored power in accordance with the control of the control unit 3020, and transmits the electrical power to the charging unit 3040. In addition, the battery unit 3060 stores electrical power which is received from the distribution unit 3080.

The charging system control apparatus 2000 according to Exemplary Embodiment 2 controls the charging of the electric vehicle 6000 by the charging system 3000 in consideration of charging and discharging performed by the battery unit 3060. Specifically, the sum of a maximum received power function and a maximum battery power function indicating the time variation of electrical power being able to be supplied to the charging unit 3040 from the battery unit 3060 is assumed as the electrical power that can be transmitted from the charging unit 3040 to the electric vehicle 6000 (hereinafter, referred to as a maximum available power). The control instruction transmission unit 2020 selects a charging characteristic function the power value of which is constantly equal to or less than the maximum available power function, from a plurality of charging characteristic functions included in the charging characteristic information.

The control instruction transmission unit 2020 controls the charging system 3000 based on the selected charging characteristic function. Specifically, the electrical power received from the external power supply 5000 by the distribution unit 3080, the electrical power transmitted to the charging unit 3040 and the battery unit 3060 by the distribution unit 3080, the electrical power transmitted to the charging unit 3040 by the battery unit 3060, and the electrical power transmitted to the electric vehicle 6000 by the charging unit 3040 are controlled so that the electrical power is transmitted from the charging unit 3040 to the electric vehicle 6000 in accordance with the charging characteristic function.

As described above, similarly to Exemplary Embodiment 1, the charging system control apparatus 2000 controls the charging system 3000 in consideration of the area information, and charges the electric vehicle 6000, thereby making it possible to accurately predict a charging completion time. In addition, using the battery unit 3060 makes it possible to charge the electric vehicle 6000 more flexibly. For example, there is a case that a certain charging characteristic function becomes larger than the maximum received power function for some time, but the power value could be constantly equal to or less than the maximum available power by supplying the electrical power from the battery unit 3060 for that time. In this case, it is possible to create a power device operation plan by selecting the above charging characteristic function. For this reason, the number of the selectable charging characteristic functions increases, and thus the electric vehicle 6000 can be charged more flexibly.

Hereinafter, the details of respective components and operations thereof according to Exemplary Embodiment 2 will be described.

<Details of Components>

The charging system control apparatus 2000 according to Exemplary Embodiment 2 includes a battery information acquisition unit 2080. The battery information acquisition unit 2080 acquires information on the amount of the electrical power stored in the battery unit 3060 (hereinafter, referred to as stored power information). Here, there are various methods in which the stored power information acquisition unit 2080 acquires the stored power information. For example, there are a method in which the charging system control apparatus 2000 includes an input unit, and receives a manual input performed by an administrator or a user of the charging system control apparatus 2000 or the charging system 3000, a method of causing the control unit 3020 to automatically acquire the amount of the electrical power stored in the battery unit 3060 and to notify the charging system control apparatus 2000 of the amount of the stored electrical power, and the like.

The charging system 3000 may receive alternating-current power from the external power supply 5000, and may receive direct-current power therefrom. In addition, when the distribution unit 3080 receives alternating-current power from the external power supply 5000, the alternating-current power may be distributed to the charging unit 3040 and the battery unit 3060, and the alternating-current power may be converted into direct-current power and then the converted power may be distributed to the charging unit 3040 and the battery unit 3060.

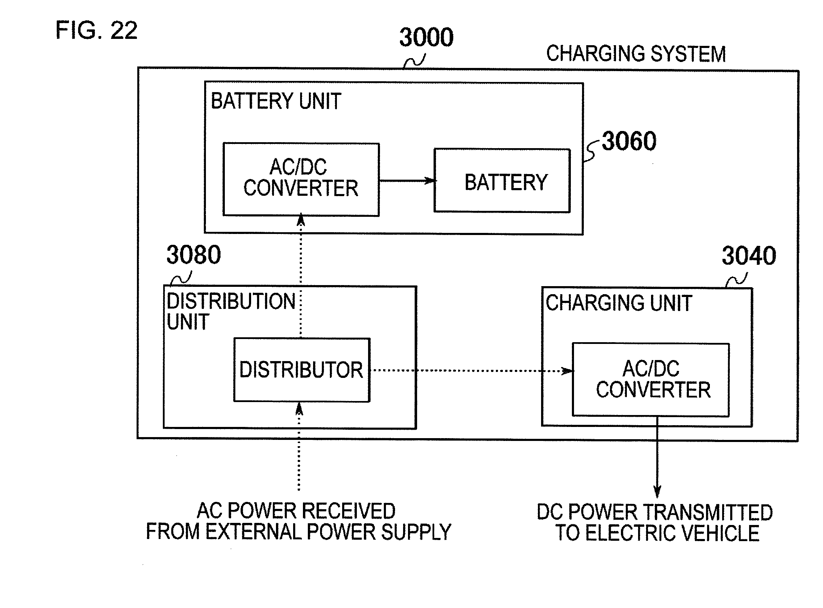

FIG. 22 illustrates an example of a flow of power conversion within the charging system 3000 when the distribution unit 3080 receives alternating-current power, and distributes the alternating-current power to the charging unit 3040 and the battery unit 3060 as it is. Here, in FIG. 22, the arrow of a dotted line indicates a flow of alternating-current power, and the arrow of a solid line indicates a flow of direct-current power. In this case, the distribution unit 3080 distributes the received electrical power to the charging unit 3040 and the battery unit 3060 using a distributor. The charging unit 3040 and the battery unit 3060 include an AC/DC converter, and convert the received alternating-current power into direct-current power having a necessary magnitude.

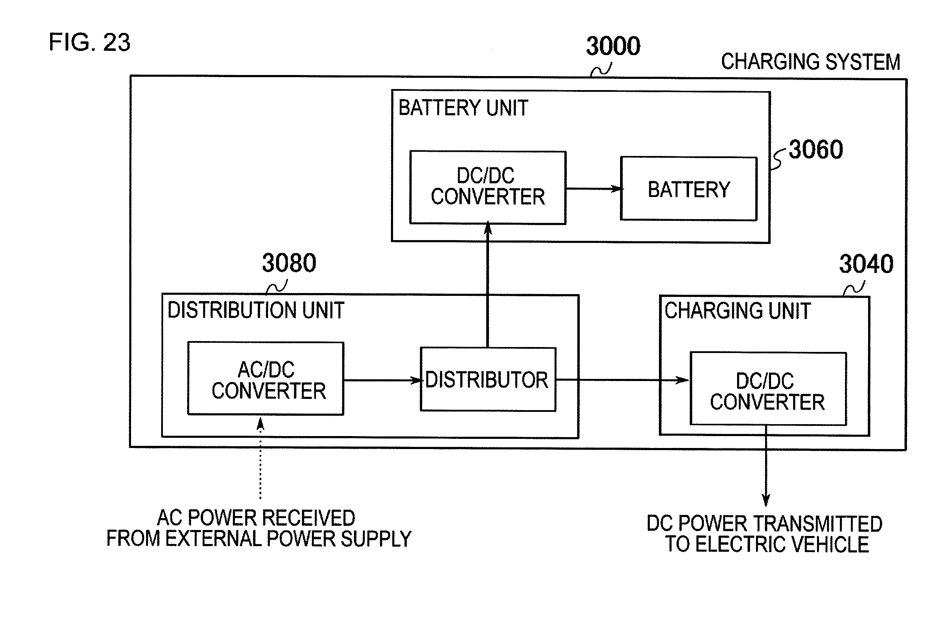

FIG. 23 illustrates an example of a flow of power conversion within the charging system 3000 when the alternating-current power received by the distribution unit 3080 is converted into direct-current power and then the converted power is distributed to the charging unit 3040 and the battery unit 3060. The meaning of the arrows in FIG. 23 is the same as that in FIG. 22. The distribution unit 3080 includes an AC/DC converter, and the electrical power received from the external power supply 5000 is converted into the direct-current power having a necessary magnitude, and the converted power is sent to a distributor. The distributor distributes the above direct-current power to the battery unit 3060 and the charging unit 3040. The charging unit 3040 and the battery unit 3060 include a DC/DC converter, and convert the direct-current power received from the distribution unit 3080 into the direct-current power having a necessary magnitude.

When the distribution unit 3080 receives direct-current power from the external power supply 5000, for example, the distribution unit 3080, the charging unit 3040 and the battery unit 3060 include a DC/DC converter, and convert the received direct-current power into the direct-current power having a necessary magnitude (not shown in Figures).

The battery unit 3060 is, for example, a secondary battery such as a lithium-ion battery.

<Details of Stored Power Information>

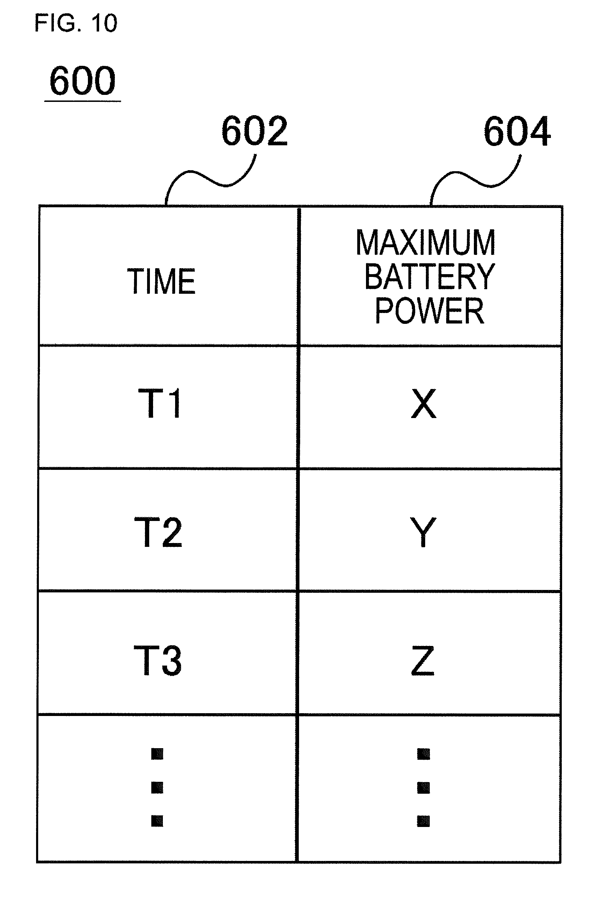

The stored power information has, for example, a maximum battery power function indicating the time variation of the electrical power being able to be supplied from the battery unit 3060 to the charging unit 3040. The maximum battery power function is determined by the electrical power being able to be discharged per unit time from the battery unit 3060 and the amount of the stored electrical power in the battery unit 3060. The maximum battery power function is represented by, for example, a maximum battery power table 600 shown in FIG. 10. The maximum battery power table 600 is a table represents an association between time and electrical power in the maximum battery power function in a list form. The maximum battery power table 600 includes, for example, time 602 and maximum battery power 604 which is the electrical power being able to be supplied to the charging unit 3040 from the battery unit 3060 at each time.

<Details of Power Device Operation Plan>

The power device operation plan in Exemplary Embodiment 2 includes a received power function indicating the time variation of the electrical power received from the external power supply 5000 by the distribution unit 3080, a charged and discharged power function indicating the time variation of charging and discharging performed by the battery unit 3060, and a distribution unit - charging unit power transmission function indicating the time variation of the electrical power transmitted from the distribution unit 3080 to the charging unit 3040.

The received power function is equal to, for example, the maximum received power function.

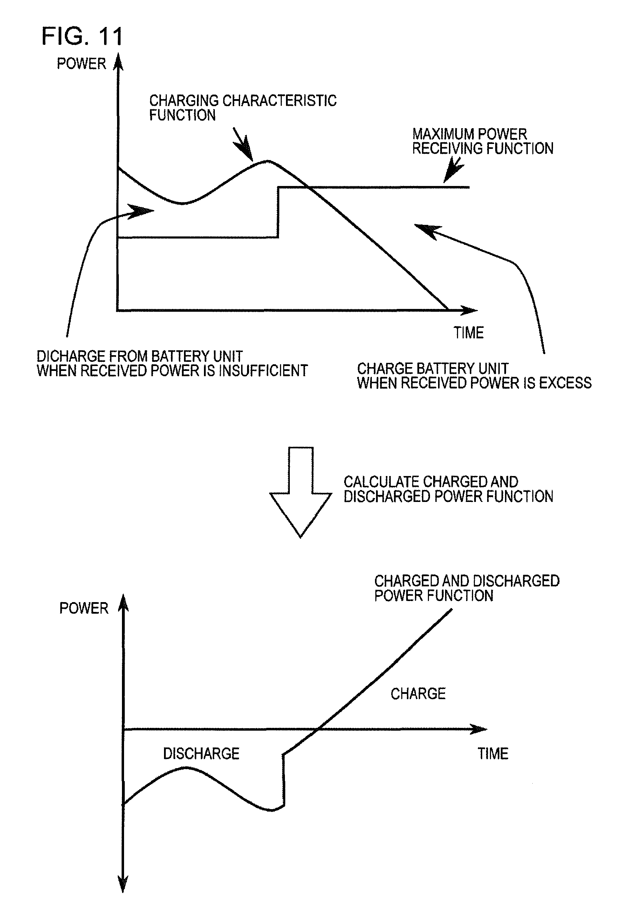

The charged and discharged power function is obtained by, for example, subtracting the charging characteristic function used in charging the electric vehicle 6000 from the maximum received power function. In this case, when the value of the charged and discharged power function is positive, the battery unit 3060 is charged by transmitting electrical power from the charging unit 3040 to the battery unit 3060. When the value of the charged and discharged power function is negative, electrical power is supplied from the battery unit 3060 to the charging unit 3040 by discharging the battery unit 3060. FIG. 11 is a diagram illustrating an image of a method of calculating the above charged and discharged power function. The upper portion of FIG. 11 represents the comparison of the charging characteristic function with the maximum received power function, and the lower portion of FIG. 11 represents a charged and discharged power function calculated using the two functions. In FIG. 11, in the former half of a charging period, since the charging characteristic function is larger than the maximum received power function, electrical power is discharged from the battery unit 3060. Therefore, the charged and discharged power function indicates negative values. On the other hand, in the latter half of a charging period, since the maximum received power function is larger than the charging characteristic function, the battery unit 3060 is charged with electrical power. Therefore, the charged and discharged power function indicates positive values.

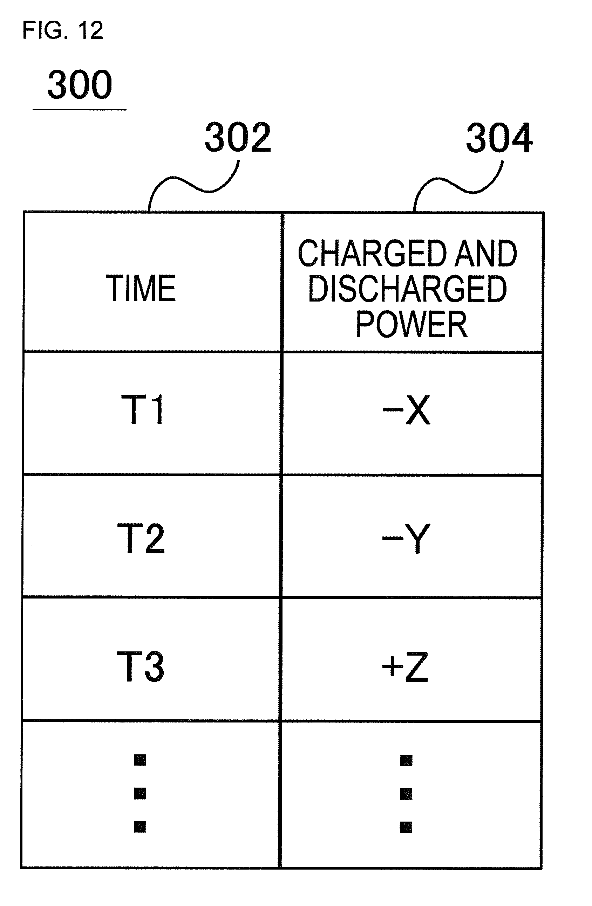

The charged and discharged power function is represented as, for example, a charged and discharged power table 300 shown in FIG. 12. The charged and discharged power table 300 is a table that represents an association between time and electrical power in the charged and discharged power function in a list form. The charged and discharged power table 300 includes, for example, time 302 and charged and discharged power 304 indicating charged and discharged power of the battery unit 3060 at each time. The charged and discharged power 304 represents, for example, that charging is performed when it indicates positive values, and discharging is performed when it indicates negative values, and the magnitude of the electrical power is represented with the absolute value of the charged and discharged power 304.

The distribution unit - charging unit power transmission function is determined on the basis of the received power function and the charged and discharged power function. Specifically, for example, the above function is obtained by subtracting the value of the electrical power, which is transmitted from the distribution unit 3080 to the battery unit 3060, from the value of the electrical power of the received power function. Here, the electrical power transmitted from the distribution unit 3080 to the battery unit 3060 is a power value of the charged and discharged power function when the power value is positive, and is 0 when the power value is negative.

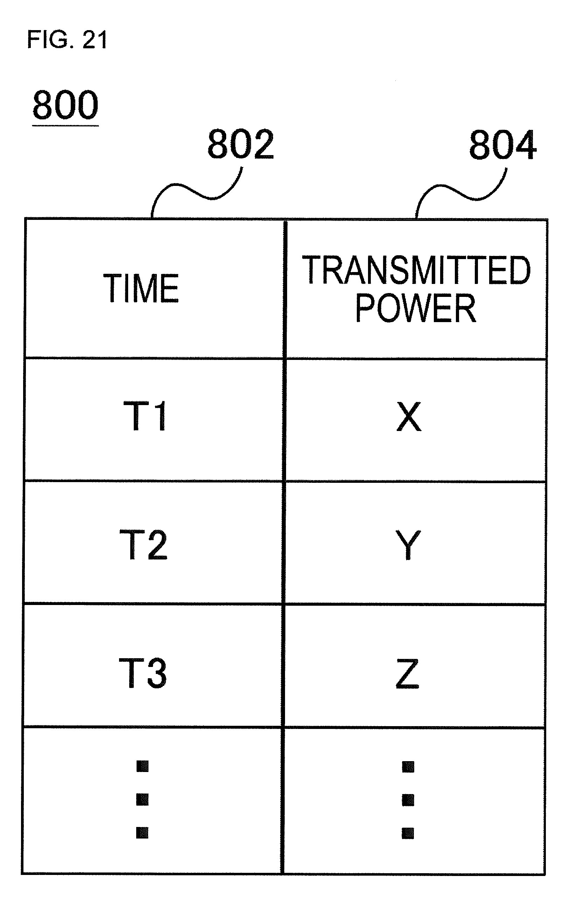

The distribution unit - charging unit power transmission function is represented as, for example, a distribution unit - charging unit power transmission table 800 shown in FIG. 21. The distribution unit - charging unit power transmission table 800 includes, for example, time 802 and transmitted power 804 indicating the magnitude of the electrical power transmitted from the distribution unit 3080 to the charging unit 3040 at the time 802.

<Flow of Creation Process of Power Device Operation Plan>

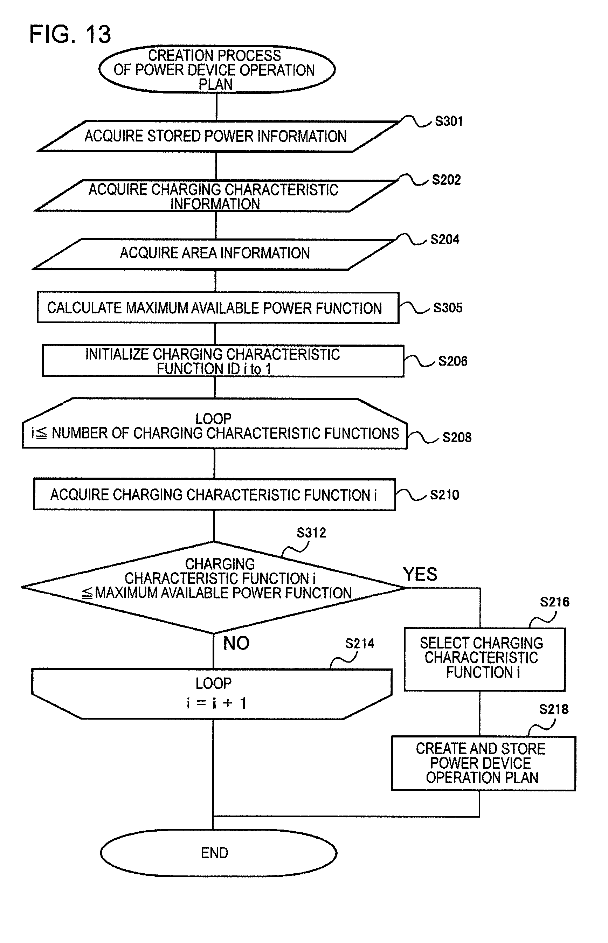

FIG. 13 illustrates a flow of the creation process of the power device operation plan in Exemplary Embodiment 2. Here, in FIG. 13, steps having the same numerals and signs as in FIG. 8 are the same processes as in FIG. 8, and thus the description thereof will not be repeated.

In step S301, the control instruction transmission unit 2020 acquires the stored power information from the stored power information acquisition unit 2080.

In step S305, the maximum available power function is calculated on the basis of the stored power information acquired in step S301 and the area information acquired in step S204. Specifically, a function obtained by adding the maximum battery power function included in the stored power information and the maximum received power function included in the area information is set to the maximum available power function.

In step S312, it is determined whether the charging characteristic function i is constantly the maximum available power function. When the charging characteristic function i is constantly the maximum available power function, the process proceeds to step S216, and otherwise the process proceeds to step S214.

In step S218, a power device operation plan is created on the basis of the charging characteristic function i and the maximum received power function. Specifically, the received power function and the charged and discharged power function are determined, and these functions are stored in the operation plan storage unit 2070.

<Control in Control Unit 3020>

The control unit 3020 controls the electrical power received from the external power supply 5000 by the distribution unit 3080, the electrical power transmitted from the distribution unit 3080 to the charging unit 3040 and the battery unit 3060, and the electrical power transmitted from the battery unit 3060 to the charging unit 3040, in accordance with a control instruction received from the control instruction transmission unit 2020.

At the time indicated by each record of the received power table 400 stored in the operation plan storage unit 2070, the control instruction transmission unit 2020 transmits the value of the received power 404 included in each of the records to the control unit 3020. The control unit 3020 controls the distribution unit 3080 so that the distribution unit 3080 receives the electrical power having a magnitude indicated by the received power 404 from the external power supply 5000.

At the time indicated by each record of the charged and discharged power table 300 which is stored in the operation plan storage unit 2070, the control instruction transmission unit 2020 transmits the value of the charged and discharged power 304 included in each record to the control unit 3020. The control unit 3020 controls the battery unit 3060 on the basis of the received value of the charged and discharged power 304. For example, when the value of the charged and discharged power 304 is positive, the control unit controls the distribution unit 3080, the battery unit 3060, or both of them so as to transmit electrical power having a magnitude indicated by the charged and discharged power 304 from the distribution unit 3080 to the battery unit 3060. In addition, when the value of the charged and discharged power 304 is negative, the control unit controls the battery unit 3060, the charging unit 3040, or both of them so as to transmit electrical power having a magnitude of the absolute value of the value of the charged and discharged power 304 from the battery unit 3060 to the charging unit 3040.

At the time indicated by each record of the distribution unit - charging unit power transmission table 800 which is stored in the operation plan storage unit 2070, the control instruction transmission unit 2020 transmits the value of the transmitted power 804 included in each record to the control unit 3020. The control unit 3020 controls the distribution unit 3080, the charging unit 3040, or both of them so that the distribution unit 3080 transmits electrical power having a magnitude indicated by the transmitted power 804 to the charging unit 3040.

The control instruction transmission unit 2020 may collectively transmit a plurality of records of the received power table 400, the charged and discharged power table 300, and the distribution unit - charging unit power transmission table 800 to the control unit 3020. In this case, the control unit 3020 controls the charging unit 3040, the battery unit 3060, and the distribution unit 3080 at the time indicated by each record.

<Operational Advantages>

With the above configuration, according to the present Exemplary Embodiment, it is possible to accurately predict a charging completion time for charging the electric vehicle 6000 in consideration of the time dependency of the electrical power supplied from the external power supply 5000, which is determined by the area where the external power supply 5000 is located. In addition, by using the battery unit 3060, electric vehicle 6000 can be charged more flexibly.

[Exemplary Embodiment 3]

<Outline>

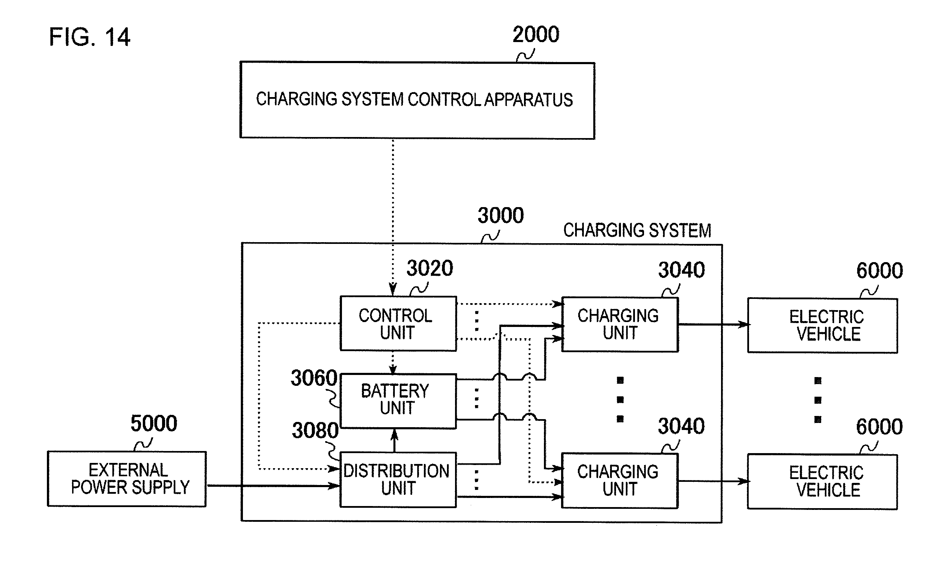

FIG. 14 is a diagram illustrating a charging system control apparatus 2000 according to Exemplary Embodiment 3 along with the usage environment thereof. Here, in FIG. 14, when function blocks having the same numerals and signs as in FIG. 1 or 9 are present, the above function blocks are assumed to have the same functions as the function blocks of FIG. 1 or 9, except for a case where a particular description will be given, and thus the description thereof will not be repeated. In addition, the charging system control apparatus 2000 in FIG. 14 has the same configuration as that of, for example, the charging system control apparatus 2000 in FIG. 9. Therefore, in FIG. 14, the internal configuration of the charging system control apparatus 2000 will be omitted.

The charging system 3000 according to Exemplary Embodiment 3 includes a plurality of charging units 3040, and each of the charging units 3040 charges the electric vehicle 6000. Each of the charging units 3040 receives electrical power from the distribution unit 3080 and charges the electric vehicle 6000. Here, the charging unit 3040 that newly starts charging is represented as a charging unit 3040-j, and the electric vehicle 6000 charged by the charging unit 3040-j is represented as an electric vehicle 6000-j. Electrical power being able to be transmitted to the electric vehicle 6000-j from the charging unit 3040-j is the electrical power obtained by subtracting the electrical power, which the charging unit 3040 other than the charging unit 3040-j can receive from the external power supply 5000 (power value of the received power function of each of the charging units 3040), from the electrical power, which the distribution unit 3080 can receive from the external power supply 5000 (power value of the maximum received power function).

In addition, the charging system 3000 according to Exemplary Embodiment 3 is configured such that the battery unit 3060 transmits electrical power to the plurality of charging units 3040. A portion of electrical power being able to be discharged from the battery unit 3060 may be supplied to another charging unit 3040 during a charging operation. On the contrary, another charging unit 3040 during a charging operation may charge the battery unit 3060. Consequently, the electrical power being able to be supplied from the battery unit 3060 to the charging unit 3040-j is the sum of the electrical power, which the battery unit 3060 can discharge (power value of the maximum battery power function), and the charged and discharged power of the battery 3060 to the charging unit under the charging operation (power value of the charged and discharged power function). Here, the charged and discharged power function is assumed to indicate a positive value when the battery unit 3060 is charged, and to have a negative value when the battery unit 3060 is discharged.

In Exemplary Embodiment 3, a method of selecting the charging characteristic function used for charging is as follows. First, the maximum available power indicating the time variation of the electrical power being able to be transmitted to the electric vehicle 6000-j from the charging unit 3040-j is obtained as in the following Expression 1. Here, a received power function k indicates the received power function of a charging unit 3040-k, and a distribution unit - charging unit power transmission function k indicates the time variation of the electrical power transmitted from the distribution unit 3080 to the charging unit 3040-k. The charging characteristic function the power value of which is constantly equal to or less than the maximum available power function is selected. In this manner, even when a plurality of charging units 3040 are present, it is possible to accurately predict a charging completion time.

[Expression 1]

[Maximum available power function] = [maximum received power function] − $\sum_{k \neq j}$ [distribution unit − charging unit power transmission function k] + [maximum battery power function] + [charged and discharged power function]

<Details of Configuration>

The charging system 3000 according to Exemplary Embodiment 3 includes the distribution unit 3080. The control unit 3020 controls the distribution unit 3080 in accordance with an instruction from the control instruction transmission unit 2020. The distribution unit 3080 distributes the electrical power received from the external power supply 5000 to each charging unit 3040 in accordance with the control of the control unit 3020.

<Details of Power Device Operation Plan>

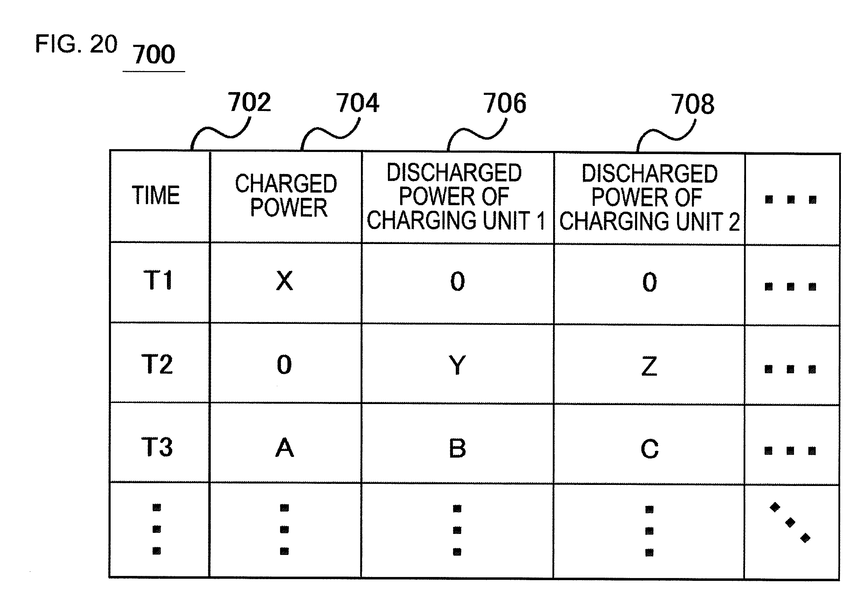

The power device operation plan has the distribution unit - charging unit power transmission table 800 for each charging unit 3040. In addition, the power device operation plan has the charged and discharged power function as a combination of a time, charging power of the battery unit 3060 at the time, and discharging power transmitted from the battery unit 3060 to each charging unit 3040 at the time. Specifically, for example, the charged and discharged power function is represented as a charging and discharging of each charging unit table 700 shown in FIG. 20. The charging and discharging of each charging unit table 700 includes, for example, time 702, charged power 704, and the magnitude of electrical power discharged to each charging unit 3040 (discharged power 706 of charging unit 1, discharged power 708 of charging unit 2, and the like). The charged and discharged power of the battery unit 3060 at each time is obtained as a value that is the sum of the charged power and the discharged power of the each charging unit 3040.

<Flow of Power Device Operation Plan Creation Process>

A creation process of power device operation plan according to Exemplary Embodiment 3 is, for example, the same as that in Exemplary Embodiment 2, and is represented by FIG. 13. However, in step S312, the maximum available power is obtained using Expression 1.

<Control in Control Unit 3020>

The control instruction transmission unit 2020 transmits a corresponding record to the control unit 3020 at the time indicated by each record of the charging and discharging of each charging unit table 700 which is stored in the operation plan storage unit 2070. The control unit 3020 controls the charging unit 3040, the battery unit 3060, and the distribution unit 3080, on the basis of the charged power indicated by the record and of the discharged power of each charged unit 3040. Specifically, first, the control unit controls the distribution unit 3080, the battery unit 3060, or both so as to transmit electrical power having a value indicated by the charging power 704 from the distribution unit 3080 to the charging unit 3040. The control unit controls the battery unit 3060, the charging unit 3040, or both so as to transmit electrical power having a magnitude indicated by the discharged power by each charging unit (discharged power 706 of charging unit 1, discharged power 708 of the charging unit 2, and the like) from the battery unit 3060 to each charging unit 3040.

The control instruction transmission unit 2020 includes the distribution unit - charging unit power transmission table 800 for each charging unit 3040, and controls the electrical power transmitted from the distribution unit 3080 to each charging unit 3040, at the time indicated by each record of each distribution unit - charging unit power transmission table 800. A control method according to each record is the same as the method of controlling the charging unit 3040 and the distribution unit 3080 in Exemplary Embodiment 2.

Similarly to Exemplary Embodiments 1 and 2, the control instruction transmission unit 2020 may collectively transmit a plurality of records of each table.

<Operational Advantages>

With the above configuration, according to the present Exemplary Embodiment, in the charging system control apparatus 2000, the electric vehicle 6000 is charged in consideration of the time dependency of the electrical power supplied from the external power supply 5000, which is determined by the area where the external power supply 5000 is located, thereby making it possible accurately predict a charging completion time. In addition, by using the battery unit 3060, it is possible to charge the electric vehicle 6000 more flexibly. Further, even when a plurality of charging units 3040 are included, it is possible to accurately predict a charging completion time for each charging system 3000.

[Exemplary Embodiment 4]

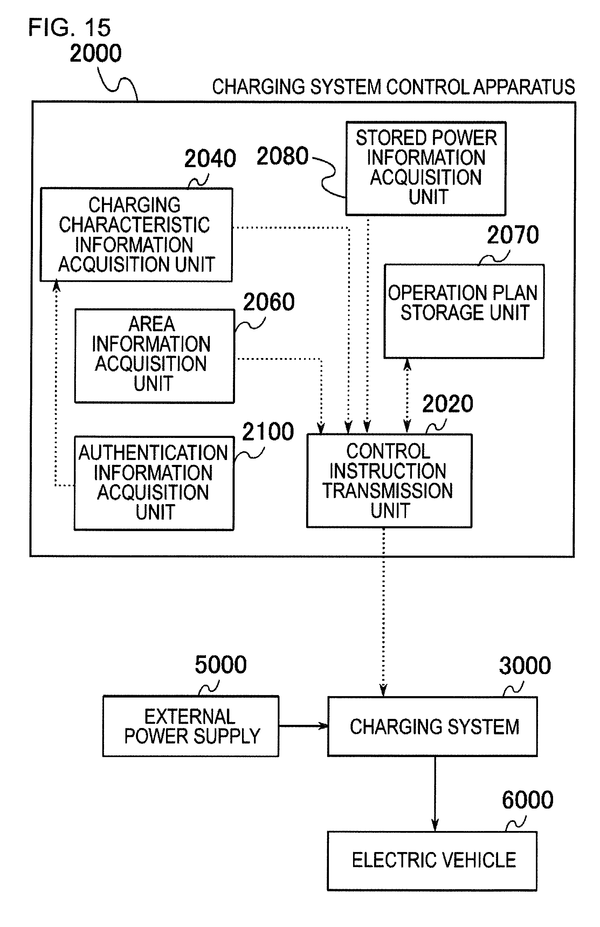

FIG. 15 is a diagram illustrating a charging system control apparatus 2000 according to Exemplary Embodiment 4 along with the usage environment thereof. Here, in FIG. 15, when function blocks having the same numerals and signs as in FIG. 1, 9 or 14 are present, the above function blocks are assumed to have the same functions as the function blocks of FIG. 1, 9 or 14, except for a case where a particular description will be given, and thus the description thereof will not be repeated. In addition, the charging system 3000 in FIG. 15 has the same configuration as that of, for example, the charging system 3000 in FIG. 9. Therefore, in FIG. 15, the internal configuration of the charging system 3000 will be omitted.

The charging system control apparatus 2000 according to Exemplary Embodiment 4 includes an authentication information acquisition unit 2100, and acquires charging characteristic information using the authentication information for specifying the vehicle type of the electric vehicle 6000. Thereby, it is easy to acquire the charging characteristic information.

A specific method of acquiring the authentication information is, for example, as follows. First, the authentication information acquisition unit 2100 receives the vehicle type of the electric vehicle 6000 as the authentication information. The authentication information acquisition unit 2100 notifies the charging characteristic information acquisition unit 2040 of the above vehicle type. The charging characteristic information acquisition unit 2040 acquires the charging characteristic information on the basis of the above vehicle type.

There are various methods of acquiring the authentication information. For example, there are a method of manually inputting information in the charging system control apparatus 2000, a method of notifying the charging system control apparatus 2000 of the information which is manually input in the charging system 3000, a method of causing the charging system 3000 to automatically acquire the authentication information from the electric vehicle 6000 and notify the charging system control apparatus 2000 of the information, and the like.

The authentication information is not limited to the vehicle type. An example of other authentication information includes the number on the license plate of the vehicle. In this case, for example, it is considered that a vehicle information database in which the number on the license plate and vehicle information including information on the type of the vehicle of the number are associated with each other is managed in an external server. The charging characteristic information acquisition unit 2040 which is notified of the above number determines the type of a target vehicle by searching the vehicle information database on the basis of the above number, and acquires charging characteristic information corresponding to the determined vehicle type. In addition, a method may be considered in which the charging characteristic information corresponding to the vehicle type is not managed for each vehicle, but each vehicle manufacturer manages a vehicle type information database includes an association between the vehicle type and the charging characteristic information.

With the above configuration, according to the present Exemplary Embodiment, in the charging system control apparatus 2000, the electric vehicle 6000 is charged in consideration of the time dependency of the electrical power supplied from the external power supply 5000 which is determined by the area where the external power supply 5000 is located, thereby making it possible to accurately predict a charging completion time. Further, since the charging characteristic information is acquired using the authentication information, it is easy to acquire the charging characteristic information.

[Exemplary Embodiment 5]

<Outline>

A charging system control apparatus 2000 according to Exemplary Embodiment 5 and the usage environment thereof are illustrated in, for example, FIG. 1, 9, 14, or 15. The respective configurations have been already described, and thus the description thereof will not be repeated.

When a plurality of charging characteristic functions the power value of which is constantly equal to or less than the maximum available power function are present, the charging system control apparatus 2000 according to

13

Exemplary Embodiment 5 selects a charging characteristic function having a shortest charging time. Thereby, it is possible to charge the electric vehicle 6000 for as short a time as possible.

<Flow of Process of Selecting Charging Characteristic Function Having Shortest Charging Time>

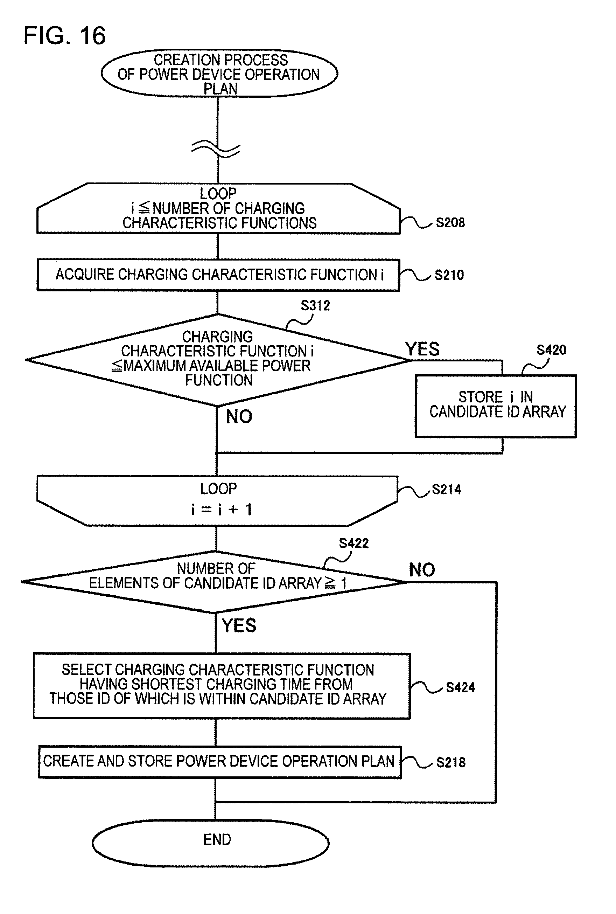

FIG. 16 illustrates a flow of the creation process of a power device operation plan in Exemplary Embodiment 5. Here, in FIG. 16, steps having the same numerals and signs as in FIGS. 8 and 13 show the same processes as in FIGS. 8 and 13, and thus the description thereof will not be repeated. In addition, in FIG. 16, step S301, step S305, and steps S202 to S206 which are performed before step S208 are the same as in FIG. 13, and thus the steps are not shown in the drawing.

In step S212, it is checked whether the charging characteristic function i is constantly equal to or less than the maximum available power function. When the charging characteristic function i is constantly equal to or less than the maximum available power function, the process proceeds to step S420. In step S420, i is stored in a candidate ID array storing an ID which is a candidate of the charging characteristic function to be selected. The process then proceeds to step S214.

After a loop process including steps S208 to S214 is performed with respect to all the charging characteristic functions, the process proceeds to step S422. In step S422, it is determined whether the number of elements of the candidate ID array is equal to or greater than 1. When the number of elements is smaller than 1, the charging characteristic function being a candidate is not present, and thus the creation of the power device operation plan is terminated. When the number of elements is equal to or greater than 1, the process proceeds to step S424.

In step S424, charging completion times are compared with each other with respect to the charging characteristic function of each ID which is stored in the candidate ID array, the charging characteristic function having a shortest charging time is selected.

<Operational Advantages>

With the above configuration, according to the present Exemplary Embodiment, in the charging system control apparatus 2000, the electric vehicle 6000 is charged in consideration of the time dependency of the electrical power supplied from the external power supply 5000 which is determined by the area where the external power supply 5000 is located, thereby making it possible to accurately predict a charging completion time. Further, when a plurality of charging characteristic functions the power value of which is constantly equal to or less than the maximum available power are present, the charging characteristic function having the shortest charging time is selected, and thus it is possible to complete the charging of the electric vehicle 6000 for as short a time as possible.

[Exemplary Embodiment 6]

<Outline>

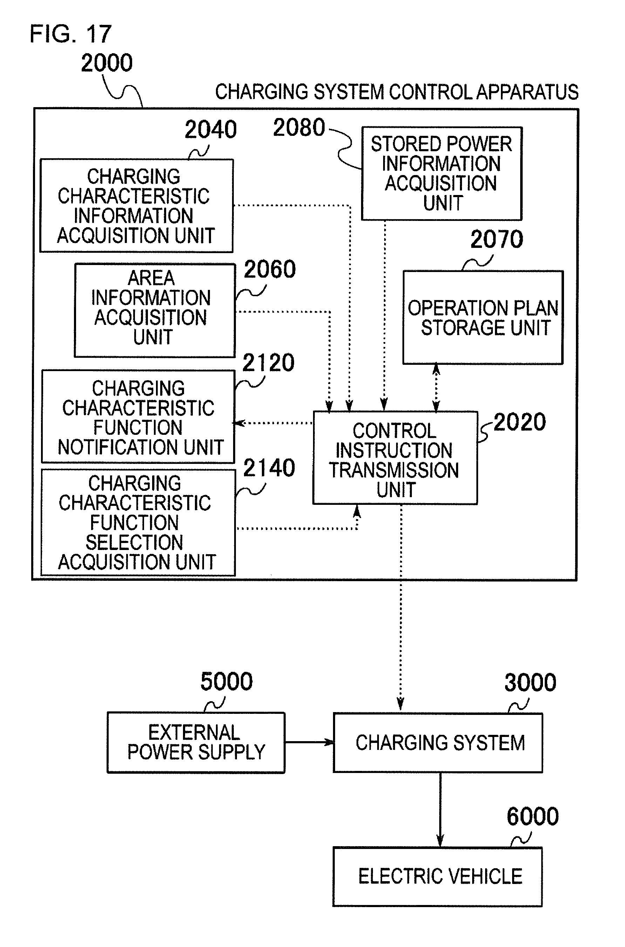

FIG. 17 is a diagram illustrating a charging system control apparatus 2000 according to Exemplary Embodiment 6 along with the usage environment thereof. Here, in FIG. 17, when function blocks having the same numerals and signs as in FIG. 1, 9, 14 or 15 are present, the above function blocks are assumed to have the same functions as the function blocks of FIG. 1, 9, 14 or 15, except for a case where a particular description will be given, and thus the description thereof will not be repeated. In addition, in FIG. 17, the charging system 3000 has the same configuration as that of, for example, the charging system 3000 in FIG. 9, and thus the internal configuration of the charging system 3000 will be omitted.

When a plurality of charging characteristic functions the power value of which is constantly equal to or less than the maximum available power function are present, the charging system control apparatus 2000 according to Exemplary Embodiment 6 shows these charging characteristic functions to a user, and causes the user to select the charging characteristic function used for charging. Thereby, it is possible to charge the electric vehicle 6000 using a method of charging suitable for user's needs. For example, when a user desires to perform a certain kind of work during the charging of the electric vehicle 6000, it is possible to select a charging characteristic function in which charging is completed after the completion time of the work.

<Details of Configuration>

The charging system control apparatus 2000 in Exemplary Embodiment 6 includes a charging characteristic function notification unit 2120 and a charging characteristic function selection acquisition unit 2140. The charging characteristic function notification unit 2120 notifies a user of the electric vehicle 6000 of candidates of a plurality of charging characteristic functions. The charging characteristic function selection acquisition unit 2140 acquires the charging characteristic function input by a user in accordance with the candidates notified of the user.

<Creation Process of Power Device Operation Plan Using Charging Characteristic Function Selected by User>

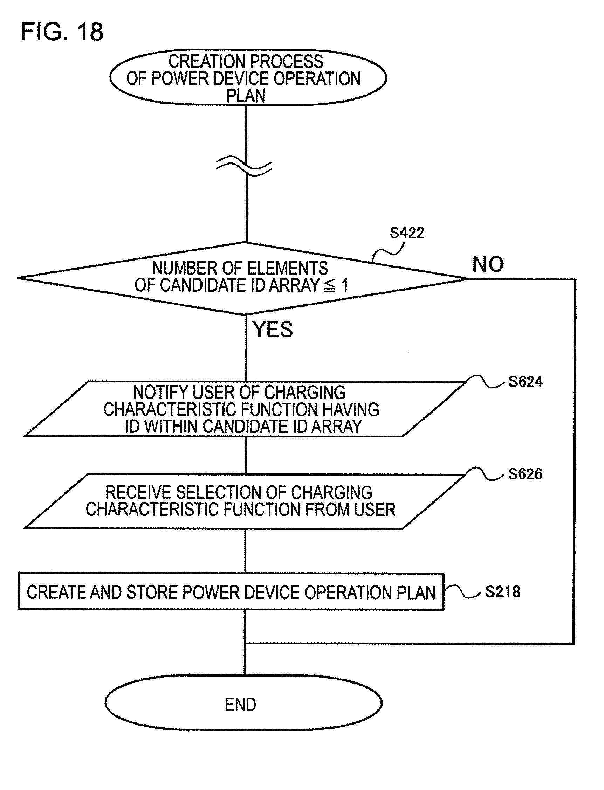

FIG. 18 illustrates a flow of a power device operation plan in Exemplary Embodiment 6. Here, in FIG. 18, steps having the same numerals and signs as in FIG. 8, 13 or 16 show the same processes as in FIG. 8, 13 or 16, and thus the description thereof will not be repeated. In addition, in FIG. 18, steps before step S422 are the same as in, for example, FIG. 16, the steps will not be denoted.

In step S624, the control instruction transmission unit 2020 notifies a user of all or some of the charging characteristic functions having each ID stored in the candidate ID array, through the charging characteristic function notification unit 2120. In step S626, the control instruction transmission unit 2020 causes a user to select a function from the charging characteristic functions notified of the user, through the charging characteristic function selection acquisition unit 2140. The creation of the power device operation plan in step S218 is performed using the charging characteristic function selected by a user in step S626.

There are various methods of notifying a user of the charging characteristic function being a candidate. For example, there are a method of installing a display device in the charging system control apparatus 2000 and notify through it, a method of installing a display device in the charging system 3000 and notify through it, a method of performing data communication with a vehicle to notify through a display device included in a car navigation system or the like of the vehicle, a method of performing data communication with a portable terminal such as a user's mobile phone to display on its display device, and the like.

There are various methods of causing a user to select the above charging characteristic function notified of the user. For example, when the notification is performed in the display device of the charging system control apparatus 2000 or the charging system 3000, there are a method of performing an input using a touch panel of the display device, a method of performing an input using a keyboard provided along therewith, and the like. When the notification is performed through a car navigation system, there are a method of performing an input from the car navigation system, and the like. When the notification is performed through a portable terminal such as a mobile phone, there are a method of performing an input from the portable terminal, and the like.

<Operational Advantages>

With the above configuration, according to the present Exemplary Embodiment, in the charging system control apparatus 2000, the electric vehicle 6000 is charged in consideration of the time dependency of the electrical power supplied from the external power supply 5000 which is determined by the area where the external power supply 5000 is located, thereby making it possible to accurately predict a charging completion time. Further, when a plurality of charging characteristic functions the power value of which is constantly equal to or less than the maximum available power are present, the charging characteristic function selected by a user is used, and thus charging can be performed using a method suitable for user's needs.

[Exemplary Embodiment 7]

A charging system control apparatus 2000 according to Exemplary Embodiment 7 and the usage environment thereof are illustrated in, for example, FIG. 1, 9, 14, 15 or 17. The respective configurations have been already described, and thus the description thereof will not be repeated.

<Determination of Maximum Available Power Considering Surplus Power>

In the charging system control apparatus 2000 according to the present Exemplary Embodiment, when the charging characteristic function is selected, electrical power having a magnitude obtained by subtracting redundant power, which indicates redundant electrical power given to the charging unit 3040, from the electrical power supplied to the charging unit 3040 is set to the electrical power being able to be transmitted from the charging unit 3040 to the electric vehicle 6000. Specifically, the charging characteristic function is selected on the basis of the electrical power obtained by subtracting the redundant power from the maximum received power function in step S212 of FIG. 8, and the electrical power obtained by subtracting the redundant power from the maximum available power function in step S312 of FIGS. 13 and 16. In this manner, even when electrical power received by the charging unit 3040 becomes smaller unexpectedly, there is a high probability of that charging completes by a charging completion prediction time.

Here, an example of a method of obtaining the maximum received power function considering the redundant power in step S212 of FIG. 8 is as, for example, the following Expression 2. Here, the multiplication of a redundant power function means that a certain rate with the maximum received power function is set as the redundant power. In addition, the subtraction of a redundant power constant means that the redundant power is given as a constant. Meanwhile, in Expression 2, the maximum received power function is replaced by the maximum available power function, and thus it is possible to obtain maximum available power considering the redundant power in step S312 of FIGS. 13 and 16.

```
[Expression 2]

[Maximum received power function after redundant power

is set] = [redundant power function] x [maximum received

power function before redundant power is set] - [redundant

power constant]
```

There are various methods of setting the redundant power function or the redundant power constant. For example, there are a method of causing an administrator of the charging system control apparatus 2000 to perform a manual input, a method of acquiring it as a part of the charging characteristic information from the charging characteristic information acquisition unit 2040, and the like.

<Operational Advantages>

With the above configuration, according to the present Exemplary Embodiment, in the charging system control apparatus 2000, the electric vehicle 6000 is charged in consideration of the time dependency of the power supplied from the external power supply 5000 which is determined by the area where the external power supply 5000 is located, thereby making it possible to accurately predict a charging completion time. Further, by making the maximum available power include redundant power used for selecting of the charging characteristic function, there is a high probability of that charging completes by a prediction time even when the power supplied to the charging unit 3040 decreases unexpectedly.

[Exemplary Embodiment 8]

<Outline>

A charging system control apparatus 2000 according to Exemplary Embodiment 8 and the usage environment thereof are illustrated in, for example, FIG. 1, 9, 14, 15 or 17. The respective configurations have been already described, and thus the description thereof will not be repeated.

When the area information is changed, the charging system control apparatus 2000 according to the present Exemplary Embodiment determines the charging characteristic function used for charging is required to be changed, and changes the power device operation plan when required. First, a new maximum available power function is obtained on the basis of the changed area information. Here, when the new maximum available power function is equal to or greater than the maximum available power function after the change, electrical power greater than the present state can be received, and thus there is no requirement to change. On the other hand, when the new maximum available power function is smaller than the maximum available power function before the change at a certain time, there is the possibility of that the shortage of the charging power occurs at that time. For this reason, it is checked whether the new maximum available power function is constantly equal to or greater than the charging characteristic function currently used. When the new maximum available power function is constantly equal to or greater than the current charging characteristic function, charging can be continued using the current charging characteristic function. On the other hand, when the new maximum available power function becomes smaller than the current charging characteristic function at any period of time, charging power is insufficient at that period of time. Consequently, the charging characteristic information is acquired again, and a charging characteristic function the power value of which is constantly equal to or less than the new maximum available power function is newly selected.

As described above, even when the area information is changed, it is possible to accurately predict a charging completion time. First, when charging can be performed using the current charging characteristic function, the charging characteristic function is not changed, and thus the charging completion time is not changed. In addition, when charging is not able to be performed using the current charging characteristic function, an appropriate charging function is newly selected, thereby making it possible to accurately predict a new charging completion time.

<Details of Change Process of Power Device Operation Plan>

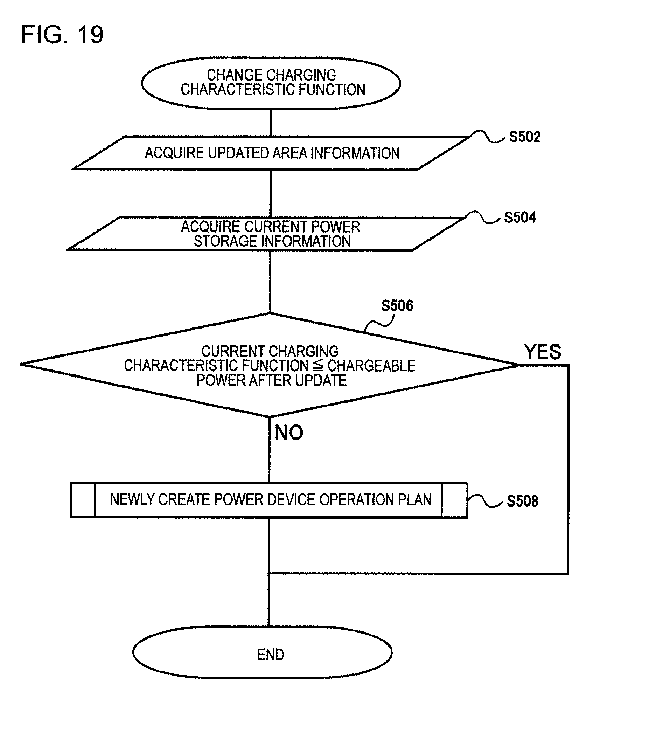

FIG. 19 illustrates a flow of a change process of the charging characteristic function in Exemplary Embodiment 8. First, in step S502, the area information after the change is acquired. In step S504, the stored power information currently used is acquired. In step S506, maximum available power after the change determined on the basis of the area information and the stored power information is compared with the charging characteristic function currently used for charging. When the maximum available power function after the change is constantly equal to or greater than the charging characteristic function, the power device operation plan is not required to be changed. For this reason, the change process of the power device operation plan is terminated. On the other hand, when the maximum available power function is smaller than the charging characteristic function at a certain time, the power device operation plan is required to be changed. For this reason, the process proceeds to step S508, and a power device operation plan is newly created.

The creation of the power device operation plan in step S508 is performed by, for example, the flow shown in FIG. 13. However, since the area information and the stored power information have been already acquired in steps S502 and S504, steps S204 and S301 are not performed.

<Operational Advantages>

With the above configuration, according to the present Exemplary Embodiment, in the charging system control apparatus 2000, the electric vehicle 6000 is charged in consideration of the time dependency of the electrical power supplied from the external power supply 5000 which is determined by the area where the external power supply 5000 is located, thereby making it possible to accurately predict a charging completion time. Further, even when the area information is changed, it is possible to accurately predict a charging completion time. When charging can be performed using the current charging characteristic function, the charging characteristic function is not changed, and thus the charging completion time is not changed. In addition, when charging is not able to be performed using the current charging characteristic function, an appropriate charging function is selected again, thereby making it possible to accurately predict a new charging completion time.

As described above, although the Exemplary Embodiments of the present invention have been set forth with reference to the drawings, they are merely illustrative of the present invention, and various configurations other than those stated above can be adopted.

Hereinafter, examples of reference forms are appended.

1. A charging system control apparatus that controls a charging system for charging an electric vehicle driven by electrical power,

wherein the charging system includes a control unit and a charging unit, and is connected to the charging system control apparatus through a communication line,

wherein the control unit controls the charging unit in accordance with an instruction which is received from the charging system control apparatus,

wherein the charging unit transmits electrical power, which the charging system receives from an external power supply, to the electric vehicle in accordance with control by the control unit, and

the charging system control apparatus includes a charging characteristic information acquisition unit, an area information acquisition unit, and a control instruction transmission unit,

wherein the charging characteristic information acquisition unit acquires charging characteristic information including at least one or more charging characteristic functions indicating a time variation of an amount of electrical power per unit time with which the electric vehicle is charged, on the basis of a type of the electric vehicle and a total amount of electrical power required to charge the electric vehicle,

wherein the area information acquisition unit acquires area information including a maximum received power function indicating time dependency of electrical power being able to be supplied from the external power supply, the area information being determined by an area where the external power supply is located, and

the control instruction transmission unit performs:

acquiring the charging characteristic information from the charging characteristic information acquisition unit and acquires the area information from the area information acquisition unit,

setting the maximum received power function as a maximum available power function indicating a time variation of electrical power with which the charging unit is able to charge the electric vehicle, on the basis of the area information,

selecting one charging characteristic function which is constantly equal to or less than the maximum available power function on the basis of the charging characteristic information and the area information, and

sending the instruction to the control unit on the basis of the charging characteristic function.

2. The charging system control apparatus according to 1, wherein the charging system further includes a battery unit that stores electrical power and a distribution unit that distributes electrical power, which the charging system receives from an external power supply, to the battery unit and the charging unit,
wherein the control unit further controls charging and discharging of the battery unit and the distribution of power by the distribution unit, in accordance with an instruction from the charging system control apparatus,
wherein the battery unit performs discharging of the charging unit and storage of power which is received from the distribution unit, in accordance with an instruction of the control unit,
the charging system control apparatus further includes a stored power information acquisition unit that acquires stored power information indicating information on an amount of electrical power stored in the battery unit, and
the control instruction transmission unit that performs:

further acquiring the stored power information from the stored power information acquisition unit, and
determining the maximum available power function using the amount of electrical power stored in the battery unit and the received power function, on the basis of the area information and the stored power information.

3. The charging system control apparatus according to 1 or 2, wherein the charging system includes two or more charging units, and
wherein the control instruction transmission unit newly determines the maximum available power function by subtracting a sum of electrical power, which is transmitted by each of the charging units operating for charging, from the maximum available power function.
4. The charging system control apparatus according to any one of 1 to 3, wherein when the area information is changed, the control instruction transmission unit performs:

comparing the charging characteristic function, which is currently used for charging, with the maximum available power function which is determined on the basis of the area information after the change, and
re-selecting a charging characteristic function which is constantly equal to or less than the maximum available power function when the charging characteristic function becomes larger than the maximum available power function at a certain time.

5. The charging system control apparatus according to any one of 1 to 4, wherein when there exists a plurality of charging characteristic functions which are constantly equal to or less than the maximum available power function in the selection of the charging characteristic functions, the charging characteristic function having an earliest charging completion time is selected from the charging characteristic functions.
6. The charging system control apparatus according to any one of 1 to 4, further includes a charging characteristic function notification unit and a charging characteristic function selection acquisition unit,
wherein when there exists a plurality of charging characteristic functions which are constantly equal to or less than the maximum available power function in the selection of the charging characteristic functions, the control instruction transmission unit performs:

notifying of a part of or all of the charging characteristic functions to a user of the charging system through the charging characteristic function notification unit, and
receiving from a user a selection of one of the plurality of charging characteristic functions which the user is notified of through the charging characteristic function selection acquisition unit.

7. The charging system control apparatus according to any one of 1 to 6, wherein electrical power obtained by subtracting a redundant power function, which indicates a time variation of redundant power given to the charging unit, from the maximum available power function is newly determined as the maximum available power function.
8. The charging system control apparatus according to any one of 1 to 7, further includes an authentication information acquisition unit that acquires authentication information for specifying the electric vehicle,
wherein the charging characteristic information acquisition unit performs:

acquiring the authentication information from the authentication information acquisition unit, and
acquiring the charging characteristic information on the basis of the authentication information.

9. A program causing a computer to have a function of operating as a charging system control apparatus that controls a charging system for charging an electric vehicle driven by electrical power,

wherein the charging system includes a control unit and a charging unit, and is connected to the computer through a communication line,
wherein the control unit controls the charging unit in accordance with an instruction which is received from the computer,
wherein the charging unit transmits electrical power, which the charging system receives from an external power supply, to the electric vehicle in accordance with control by the control unit, and
the program causes the computer to have:

a function of acquiring charging characteristic information including at least one or more charging characteristic functions indicating a time variation of an amount of electrical power per unit time with which the electric vehicle is charged, on the basis of a type of the electric vehicle and a total amount of electrical power required to charge the electric vehicle;
a function of acquiring area information including a maximum received power function indicating time dependency of electrical power being able to be supplied from the external power supply, the area information being determined by an area where the external power supply is located;
a function of setting the maximum received power function as a maximum available power function indicating a time variation of electrical power with which the charging unit is able to charge the electric vehicle, on the basis of the area information;
a function of selecting one charging characteristic function which is constantly equal to or less than the maximum available power function on the basis of the charging characteristic information and the area information; and
a function of sending the instruction to the control unit on the basis of the charging characteristic function.

10. The program according to 9, wherein the charging system further includes a battery unit that stores electrical power and a distribution unit that distributes electrical power, which the charging system receives from an external power supply, to the battery unit and the charging unit,
wherein the control unit further controls charging and discharging of the battery unit and the distribution of power by the distribution unit, in accordance with an instruction from the computer,
wherein the battery unit performs discharging of the charging unit and storage of power which is received from the distribution unit, in accordance with an instruction of the control unit,
the program causes the computer to have:

a function of acquiring stored power information indicating information on an amount of electrical power stored in the battery unit; and
a function of determining the maximum available power function using the amount of electrical power stored in the battery unit and the received power function, on the basis of the area information and the stored power information.

11. The program according to 9 or 10, wherein the charging system includes two or more charging units, and
the program causes the computer to further have a function of newly determining the maximum available power function by subtracting a sum of electrical power, which is transmitted by each of the charging units operating for charging, from the maximum available power function.
12. The program according to any one of 9 to 11, wherein when the area information is changed, the program causing the computer to further have:

a function of comparing the charging characteristic function, which is currently used for charging, with the maximum available power function which is determined on the basis of the area information after the change; and
a function of re-selecting a charging characteristic function which is constantly equal to or less than the maximum available power function when the charging characteristic function becomes larger than the maximum available power function at a certain time.

13. The program according to any one of 9 to 12, wherein when there exists a plurality of charging characteristic functions which are constantly equal to or less than the maximum available power function in the selection of the charging characteristic functions, the program causing the computer to further have a function of selecting the charging characteristic function having an earliest charging completion time from the charging characteristic functions.
14. The program according to any one of 9 to 12, wherein when there exists a plurality of charging characteristic functions which are constantly equal to or less than the maximum available power function in the selection of the charging characteristic functions, the program causing the computer to further have:

a function of notifying of a part of or all of the charging characteristic functions to a user of the charging system; and
a function of receiving from a user a selection of one of the plurality of charging characteristic functions which the user is notified of.

15. The program according to any one of 9 to 14, the program causing the computer to further have a function of newly determining, as the maximum available power function, electrical power obtained by subtracting a redundant power function, which indicates a time variation of redundant power given to the charging unit, from the maximum available power function.

16. The program according to any one of 9 to 15, the program causing the computer to further have:

a function of acquiring authentication information for specifying the electric vehicle; and
a function of acquiring the charging characteristic information on the basis of the authentication information.

17. A control method which is executed by a computer that controls a charging system for charging an electric vehicle driven by electrical power,
wherein the charging system includes a control unit and a charging unit, and is connected to the computer through a communication line,
wherein the control unit controls the charging unit in accordance with an instruction which is received from the computer,
wherein the charging unit transmits electrical power, which the charging system receives from an external power supply, to the electric vehicle in accordance with control by the control unit, and
the control method includes:

a step of acquiring charging characteristic information including at least one or more charging characteristic functions indicating a time variation of an amount of electrical power per unit time with which the electric vehicle is charged, on the basis of a type of the electric vehicle and a total amount of electrical power required to charge the electric vehicle;
a step of acquiring area information including a maximum received power function indicating time dependency of electrical power being able to be supplied from the external power supply, the area information being determined by an area where the external power supply is located;
a step of setting the maximum received power function as a maximum available power function indicating a time variation of electrical power with which the charging unit is able to charge the electric vehicle, on the basis of the area information;
a step of selecting one charging characteristic function which is constantly equal to or less than the maximum available power function on the basis of the charging characteristic information and the area information; and
a step of sending the instruction to the control unit on the basis of the charging characteristic function.

18. The control method according to 17, wherein the charging system further includes a battery unit that stores electrical power and a distribution unit that distributes electrical power, which the charging system receives from an external power supply, to the battery unit and the charging unit,
wherein the control unit further controls charging and discharging of the battery unit and the distribution of power by the distribution unit, in accordance with an instruction from the computer,
wherein the battery unit performs discharging of the charging unit and storage of power which is received from the distribution unit, in accordance with an instruction of the control unit,
the control method includes:

a step of acquiring stored power information indicating information on an amount of electrical power stored in the battery unit; and
a step of determining the maximum available power function using the amount of electrical power stored in the battery unit and the received power function, on the basis of the area information and the stored power information.

19. The control method according to 17 or 18, wherein the charging system includes two or more charging units, and the control method includes a step of newly determining the maximum available power function by subtracting a sum of electrical power, which is transmitted by each of the charging units operating for charging, from the maximum available power function.

20. The control method according to any one of 17 to 19, wherein when the area information is changed, the control method including:

a step of comparing the charging characteristic function, which is currently used for charging, with the maximum available power function which is determined on the basis of the area information after the change; and

a step of re-selecting a charging characteristic function which is constantly equal to or less than the maximum available power function when the charging characteristic function becomes larger than the maximum available power function at a certain time.

21. The control method according to any one of 17 to 20, wherein when there exists a plurality of charging characteristic functions which are constantly equal to or less than the maximum available power function in the selection of the charging characteristic functions, the control method including a step of selecting the charging characteristic function having an earliest charging completion time from the charging characteristic functions.

22. The control method according to any one of 17 to 20, wherein when there exists a plurality of charging characteristic functions which are constantly equal to or less than the maximum available power function in the selection of the charging characteristic functions, the control method including:

a step of notifying of a part of or all of the charging characteristic functions to a user of the charging system; and

a step of receiving from a user a selection of one of the plurality of charging characteristic functions which the user is notified of.

23. The control method according to any one of 17 to 22, the control method further including a step of newly determining, as the maximum available power function, electrical power obtained by subtracting a redundant power function, which indicates a time variation of redundant power given to the charging unit, from the maximum available power function.

24. The control method according to any one of 17 to 23, the control method further including:

a step of acquiring authentication information for specifying the electric vehicle; and

a step of acquiring the charging characteristic information on the basis of the authentication information.

The application claims priority of Japanese Patent Application No. 2012-150453 filed on July 4, 2012, the content of which is incorporated herein by reference in its entirety.

## Claims

1.   A charging system control apparatus that controls a charging system for charging an electric vehicle driven by electrical power,

wherein the charging system includes a control unit and a charging unit, and is connected to the charging system control apparatus through a communication line,

wherein the control unit controls the charging unit in accordance with an instruction which is received from the charging system control apparatus,

wherein the charging unit transmits electrical power, which the charging system receives from an external power supply, to the electric vehicle in accordance with control by the control unit, and

the charging system control apparatus includes a charging characteristic information acquisition unit, an area information acquisition unit, and a control instruction transmission unit,

wherein the charging characteristic information acquisition unit acquires charging characteristic information including at least one or more charging characteristic functions indicating a time variation of an amount of electrical power per unit time with which the electric vehicle is charged, on the basis of a type of the electric vehicle and a total amount of electrical power required to charge the electric vehicle,

wherein the area information acquisition unit acquires area information including a maximum received power function indicating time dependency of electrical power being able to be supplied from the external power supply, the area information being determined by an area where the external power supply is located, and

wherein the control instruction transmission unit performs:

acquiring the charging characteristic information from the charging characteristic information acquisition unit and acquires the area information from the area information acquisition unit;

setting the maximum received power function as a maximum available power function indicating a time variation of electrical power with which the charging unit is able to charge the electric vehicle, on the basis of the area information;

selecting one charging characteristic function which is constantly equal to or less than the maximum available power function on the basis of the charging characteristic information and the area information; and
sending the instruction to the control unit on the basis of the charging characteristic function.

2. The charging system control apparatus according to claim 1, wherein the charging system further includes a battery unit that stores electrical power and a distribution unit that distributes electrical power, which the charging system receives from an external power supply, to the battery unit and the charging unit,
wherein the control unit further controls charging and discharging of the battery unit and the distribution of power by the distribution unit, in accordance with an instruction from the charging system control apparatus,
wherein the battery unit performs discharging of the charging unit and storage of power which is received from the distribution unit, in accordance with an instruction of the control unit,
the charging system control apparatus further includes a stored power information acquisition unit that acquires stored power information indicating information on an amount of electrical power stored in the battery unit, and
the control instruction transmission unit that performs:

further acquiring the stored power information from the stored power information acquisition unit, and
determining the maximum available power function using the amount of electrical power stored in the battery unit and the received power function, on the basis of the area information and the stored power information.

3. The charging system control apparatus according to claim 1 or 2, wherein the charging system includes two or more charging units, and
wherein the control instruction transmission unit newly determines the maximum available power function by subtracting a sum of electrical power, which is transmitted by each of the charging units operating for charging, from the maximum available power function.

4. The charging system control apparatus according to any one of claims 1 to 3, wherein when the area information is changed, the control instruction transmission unit performs:

comparing the charging characteristic function, which is currently used for charging, with the maximum available power function which is determined on the basis of the area information after the change, and
re-selecting a charging characteristic function which is constantly equal to or less than the maximum available power function when the charging characteristic function becomes larger than the maximum available power function at a certain time.

5. The charging system control apparatus according to any one of claims 1 to 4, wherein when there exists a plurality of charging characteristic functions which are constantly equal to or less than the maximum available power function in the selection of the charging characteristic functions, the charging characteristic function having an earliest charging completion time is selected from the charging characteristic functions.

6. The charging system control apparatus according to any one of claims 1 to 4, further includes a charging characteristic function notification unit and a charging characteristic function selection acquisition unit,
wherein when there exists a plurality of charging characteristic functions which are constantly equal to or less than the maximum available power function in the selection of the charging characteristic functions, the control instruction transmission unit performs:

notifying of a part of or all of the charging characteristic functions to a user of the charging system through the charging characteristic function notification unit, and
receiving from a user a selection of one of the plurality of charging characteristic functions which the user is notified of through the charging characteristic function selection acquisition unit.

7. The charging system control apparatus according to any one of claims 1 to 6, wherein electrical power obtained by subtracting a redundant power function, which indicates a time variation of redundant power given to the charging unit, from the maximum available power function is newly determined as the maximum available power function.

8. The charging system control apparatus according to any one of claims 1 to 7, further includes an authentication information acquisition unit that acquires authentication information for specifying the electric vehicle,
wherein the charging characteristic information acquisition unit performs:

acquiring the authentication information from the authentication information acquisition unit, and

acquiring the charging characteristic information on the basis of the authentication information.

9. A program causing a computer to have a function of operating as a charging system control apparatus that controls a charging system for charging an electric vehicle driven by electrical power,
wherein the charging system includes a control unit and a charging unit, and is connected to the computer through a communication line,
wherein the control unit controls the charging unit in accordance with an instruction which is received from the computer,
wherein the charging unit transmits electrical power, which the charging system receives from an external power supply, to the electric vehicle in accordance with control by the control unit, and
the program causes the computer to have:

a function of acquiring charging characteristic information including at least one or more charging characteristic functions indicating a time variation of an amount of electrical power per unit time with which the electric vehicle is charged, on the basis of a type of the electric vehicle and a total amount of electrical power required to charge the electric vehicle,
a function of acquiring area information including a maximum received power function indicating time dependency of electrical power being able to be supplied from the external power supply, the area information being determined by an area where the external power supply is located, and
a function of setting the maximum received power function as a maximum available power function indicating a time variation of electrical power with which the charging unit is able to charge the electric vehicle, on the basis of the area information,
a function of selecting one charging characteristic function which is constantly equal to or less than the maximum available power function on the basis of the charging characteristic information and the area information, and
a function of sending the instruction to the control unit on the basis of the charging characteristic function.

10. A control method which is executed by a computer that controls a charging system for charging an electric vehicle driven by electrical power,
wherein the charging system includes a control unit and a charging unit, and is connected to the computer through a communication line,
wherein the control unit controls the charging unit in accordance with an instruction which is received from the computer,
wherein the charging unit transmits electrical power, which the charging system receives from an external power supply, to the electric vehicle in accordance with control by the control unit, and
the control method includes:

a step of acquiring charging characteristic information including at least one or more charging characteristic functions indicating a time variation of an amount of electrical power per unit time with which the electric vehicle is charged, on the basis of a type of the electric vehicle and a total amount of electrical power required to charge the electric vehicle,
a step of acquiring area information including a maximum received power function indicating time dependency of electrical power being able to be supplied from the external power supply, the area information being determined by an area where the external power supply is located, and
a step of setting the maximum received power function as a maximum available power function indicating a time variation of electrical power with which the charging unit is able to charge the electric vehicle, on the basis of the area information,
a step of selecting one charging characteristic function which is constantly equal to or less than the maximum available power function on the basis of the charging characteristic information and the area information, and
a step of sending the instruction to the control unit on the basis of the charging characteristic function.

FIG. 1

**2000**

CHARGING SYSTEM CONTROL APPARATUS

**2070**
OPERATION PLAN STORAGE UNIT

**2040**
CHARGING CHARACTERISTIC INFORMATION ACQUISITION UNIT

**2060**
AREA INFORMATION ACQUISITION UNIT

**2020**
CONTROL INSTRUCTION TRANSMISSION UNIT

CHARGING SYSTEM **3000**

**3020**
CONTROL UNIT

**5000**
EXTERNAL POWER SUPPLY

**3040**
CHARGING UNIT

**6000**
ELECTRIC VEHICLE

## FIG. 2

CHARGING
POWER

CHARGING CHARACTERISTIC FUNCTION 1

CHARGING COMPLETION TIME

TIME

CHARGING
POWER

CHARGING CHARACTERISTIC FUNCTION 2

CHARGING COMPLETION TIME

TIME

CHARGING
POWER

CHARGING CHARACTERISTIC FUNCTION 3

TIME

CHARGING COMPLETION TIME

FIG. 3

FIG. 4

**200**

| TIME | MAXIMUM RECEIVED POWER |
|------|------------------------|
| 202 | 204 |
| T1 | X |
| T2 | Y |
| T3 | Z |
| ⋮ | ⋮ |

FIG. 5

<u>100</u>

| CHARACTERISTIC ID | ELAPSED TIME | POWER |
|:---:|:---:|:---:|
| 1 | T1 | P(1,T1) |
| 1 | T2 | P(1,T2) |
| 1 | T3 | P(1,T3) |
| 2 | T1 | P(2,T1) |
| 2 | T2 | P(2,T2) |
| 2 | T3 | P(2,T3) |
| 2 | T4 | P(2,T4) |
| ⋮ | ⋮ | ⋮ |

FIG. 6

## 400

| TIME | RECEIVED POWER |
|------|----------------|
| T1 | X |
| T2 | Y |
| T3 | Z |
| ⋮ | ⋮ |

*402* *404*

FIG. 7

```
        ┌─────────────────────────┐
        │   CHARGING SYSTEM       │
        │   CONTROL PROCESS       │
        └─────────────────────────┘
                    │
        ┌─────────────────────────────────────────────────┐
        │ CAUSE CONTROL INSTRUCTION TRANSMISSION UNIT      │  ⌇ S102
        │ TO CREATE AND STORE POWER DEVICE OPERATION PLAN  │
        └─────────────────────────────────────────────────┘
                    │
        ┌─────────────────────────────────────────────────┐
        │ NOTIFY USER OF CHARGING                          │  ⌇ S104
        │ COMPLETION PREDICTION TIME                       │
        └─────────────────────────────────────────────────┘
                    │
        ┌─────────────────────────────────────────────────┐
        │ CAUSE CONTROL INSTRUCTION TRANSMISSION           │  ⌇ S106
        │ UNIT TO CONTROL CHARGING SYSTEM ON THE BASIS     │
        │ OF POWER DEVICE OPERATION PLAN                   │
        └─────────────────────────────────────────────────┘
                    │
        ┌─────────────────────────┐
        │           END           │
        └─────────────────────────┘
```

## FIG. 8

```
        ( CREATE POWER DEVICE
             OPERATION PLAN )
                    │
        ┌───────────────────────────┐
        │ ACQUIRE CHARGING CHARACTERISTIC │  ⟋⟍ S202
        │        INFORMATION         │
        └───────────────────────────┘
                    │
        ┌───────────────────────────┐
        │  ACQUIRE AREA INFORMATION  │  ⟋⟍ S204
        └───────────────────────────┘
                    │
        ┌───────────────────────────┐
        │ INITIALIZE CHARGING CHARACTERISTIC │  ⟋⟍ S206
        │      FUNCTION ID i to 1    │
        └───────────────────────────┘
                    │
        ┌───────────────────────────┐
        │           LOOP            │  ⟋⟍ S208
        │ i≦ NUMBER OF CHARGING CHARACTERISTIC FUNCTIONS │
        └───────────────────────────┘
                    │
        ┌───────────────────────────┐
        │ ACQUIRE CHARGING CHARACTERISTIC FUNCTION i │  ⟋⟍ S210
        └───────────────────────────┘
                    │
                                        S212
                  ◇ CHARGING
              CHARACTERISTIC FUNCTION
          i≦ MAXIMUM RECEIVED POWER FUNCTION ◇ ──── YES
                    │                                │
                    NO                               │  S216
                                                     │
                                        ┌───────────────────┐
                                        │  SELECT CHARGING  │
                                        │  CHARACTERISTIC   │
                                        │    FUNCTION i     │
                                        └───────────────────┘
        ┌───────────────────────────┐                │  S218
        │           LOOP            │  ⟋⟍ S214        │
        │        i = i + 1          │       ┌───────────────────┐
        └───────────────────────────┘       │  CREATE AND STORE │
                    │                        │   POWER DEVICE    │
                    │                        │  OPERATION PLAN   │
                    │                        └───────────────────┘
                    │                                │
                    └────────────┬───────────────────┘
                                 │
                            (  END  )
```

FIG. 9

2000

CHARGING SYSTEM CONTROL APPARATUS

2070
OPERATION PLAN STORAGE UNIT

2080
POWER STORAGE INFORMATION ACQUISITION UNIT

2040
CHARGING CHARACTERISTIC INFORMATION ACQUISITION UNIT

2060
AREA INFORMATION ACQUISITION UNIT

2020
CONTROL INSTRUCTION TRANSMISSION UNIT

CHARGING SYSTEM

3000

3060
BATTERY UNIT

3020
CONTROL UNIT

5000
EXTERNAL POWER SUPPLY

3080
DISTRIBUTION UNIT

3040
CHARGING UNIT

6000
ELECTRIC VEHICLE

FIG. 10

## 600

| TIME | MAXIMUM BATTERY POWER |
|:---:|:---:|
| T1 | X |
| T2 | Y |
| T3 | Z |
| ⋮ | ⋮ |

602      604

# FIG. 11

FIG. 12

300

| TIME | CHARGED AND DISCHARGED POWER |
|:---:|:---:|
| T1 | −X |
| T2 | −Y |
| T3 | +Z |
| ⋮ | ⋮ |

302

304

FIG. 13

$$\left(\begin{array}{c}\text{CREATION PROCESS}\\\text{OF POWER DEVICE OPERATION}\\\text{PLAN}\end{array}\right)$$

ACQUIRE STORED POWER INFORMATION — S301

ACQUIRE CHARGING CHARACTERISTIC INFORMATION — S202

ACQUIRE AREA INFORMATION — S204

CALCULATE MAXIMUM AVAILABLE POWER FUNCTION — S305

INITIALIZE CHARGING CHARACTERISTIC FUNCTION ID i to 1 — S206

LOOP
i ≦ NUMBER OF CHARGING CHARACTERISTIC FUNCTIONS — S208

ACQUIRE CHARGING CHARACTERISTIC FUNCTION i — S210

S312

CHARGING CHARACTERISTIC FUNCTION i ≦ MAXIMUM AVAILABLE POWER FUNCTION

YES

NO

S214

LOOP
i = i + 1

S216

SELECT CHARGING CHARACTERISTIC FUNCTION i

S218

CREATE AND STORE POWER DEVICE OPERATION PLAN

END

FIG. 14

CHARGING SYSTEM CONTROL APPARATUS    2000

CHARGING SYSTEM    3000

CONTROL UNIT    3020

BATTERY UNIT    3060

DISTRIBUTION UNIT    3080

CHARGING UNIT    3040

CHARGING UNIT    3040

ELECTRIC VEHICLE    6000

ELECTRIC VEHICLE    6000

EXTERNAL POWER SUPPLY    5000

EP 2 871 748 A1

37

FIG. 15

2000

CHARGING SYSTEM CONTROL APPARATUS

2040 2080

STORED POWER
INFORMATION
ACQUISITION
UNIT

CHARGING
CHARACTERISTIC
INFORMATION
ACQUISITION UNIT

2070

OPERATION PLAN
STORAGE UNIT

2060

AREA
INFORMATION
ACQUISITION
UNIT

2100

AUTHENTICATION
INFORMATION
ACQUISITION
UNIT

2020

CONTROL
INSTRUCTION
TRANSMISSION
UNIT

5000

EXTERNAL
POWER SUPPLY

3000

CHARGING SYSTEM

6000

ELECTRIC VEHICLE

## FIG. 16

CREATION PROCESS
OF POWER DEVICE OPERATION
PLAN

LOOP
i ≦ NUMBER OF CHARGING
CHARACTERISTIC FUNCTIONS — S208

ACQUIRE CHARGING CHARACTERISTIC FUNCTION i — S210

S312

CHARGING
CHARACTERISTIC FUNCTION i
≦ MAXIMUM AVAILABLE POWER
FUNCTION

YES → S420

STORE i IN
CANDIDATE ID ARRAY

NO

LOOP
i = i + 1 — S214

S422

NUMBER OF
ELEMENTS OF CANDIDATE ID ARRAY ≧ 1

NO

YES

SELECT CHARGING CHARACTERISTIC FUNCTION
HAVING SHORTEST CHARGING TIME FROM
THOSE ID OF WHICH IS WITHIN CANDIDATE ID ARRAY — S424

CREATE AND STORE POWER DEVICE OPERATION PLAN — S218

END

FIG. 17

2000

CHARGING SYSTEM CONTROL APPARATUS

2040

CHARGING
CHARACTERISTIC
INFORMATION
ACQUISITION UNIT

2080

STORED POWER
INFORMATION
ACQUISITION
UNIT

2060

AREA
INFORMATION
ACQUISITION
UNIT

2070

OPERATION PLAN
STORAGE UNIT

2120

CHARGING
CHARACTERISTIC
FUNCTION
NOTIFICATION UNIT

2020

CONTROL
INSTRUCTION
TRANSMISSION
UNIT

2140

CHARGING
CHARACTERISTIC
FUNCTION
SELECTION
ACQUISITION UNIT

5000

EXTERNAL
POWER SUPPLY

3000

CHARGING SYSTEM

6000

ELECTRIC VEHICLE

## FIG. 18

CREATION PROCESS
OF POWER DEVICE OPERATION
PLAN

S422

NUMBER OF ELEMENTS
OF CANDIDATE ID ARRAY $\leqq$ 1

NO

YES

NOTIFY USER OF CHARGING
CHARACTERISTIC FUNCTION HAVING
ID WITHIN CANDIDATE ID ARRAY

S624

RECEIVE SELECTION OF CHARGING
CHARACTERISTIC FUNCTION FROM USER

S626

CREATE AND STORE POWER DEVICE OPERATION PLAN

S218

END

## FIG. 19

CHANGE CHARGING
CHARACTERISTIC FUNCTION

ACQUIRE UPDATED AREA INFORMATION — S502

ACQUIRE CURRENT POWER
STORAGE INFORMATION — S504

S506

CURRENT CHARGING
CHARACTERISTIC FUNCTION $\leqq$ CHARGEABLE
POWER AFTER UPDATE

YES

NO

NEWLY CREATE POWER DEVICE OPERATION PLAN — S508

END

FIG. 20  700

| TIME | CHARGED POWER | DISCHARGED POWER OF CHARGING UNIT 1 | DISCHARGED POWER OF CHARGING UNIT 2 | ・・・ |
|---|---|---|---|---|
| T1 | X | 0 | 0 | ・・・ |
| T2 | 0 | Y | Z | ・・・ |
| T3 | A | B | C | ・・・ |
| ⋮ | ⋮ | ⋮ | ⋮ | ◆◆◆ |

EP 2 871 748 A1

FIG. 21

800

| TIME | TRANSMITTED POWER |
|------|-------------------|
| T1 | X |
| T2 | Y |
| T3 | Z |
| ⋮ | ⋮ |

FIG. 22

CHARGING SYSTEM

3000

BATTERY UNIT

3060

AC/DC CONVERTER → BATTERY

3080

DISTRIBUTION UNIT

DISTRIBUTOR

3040

CHARGING UNIT

AC/DC CONVERTER

AC POWER RECEIVED
FROM EXTERNAL POWER SUPPLY

DC POWER TRANSMITTED
TO ELECTRIC VEHICLE

EP 2 871 748 A1

FIG. 23

CHARGING SYSTEM

3000

BATTERY UNIT

3060

| DC/DC CONVERTER | → | BATTERY |

3080

DISTRIBUTION UNIT

3040

CHARGING UNIT

| AC/DC CONVERTER | → | DISTRIBUTOR | → | DC/DC CONVERTER |

AC POWER RECEIVED
FROM EXTERNAL POWER SUPPLY

DC POWER TRANSMITTED
TO ELECTRIC VEHICLE

EP 2 871 748 A1

## INTERNATIONAL SEARCH REPORT

| International application No. |
|---|
| PCT/JP2013/061357 |

**A. CLASSIFICATION OF SUBJECT MATTER**
*H02J7/10*(2006.01)i, *B60L11/18*(2006.01)i, *H02J3/00*(2006.01)i, *H02J7/00*
(2006.01)i, *H02J7/02*(2006.01)i, *H02J13/00*(2006.01)i

According to International Patent Classification (IPC) or to both national classification and IPC

**B. FIELDS SEARCHED**

Minimum documentation searched (classification system followed by classification symbols)
H02J7/10, B60L11/18, H02J3/00, H02J7/00, H02J7/02, H02J13/00

Documentation searched other than minimum documentation to the extent that such documents are included in the fields searched
Jitsuyo Shinan Koho          1922-1996     Jitsuyo Shinan Toroku Koho     1996-2013
Kokai Jitsuyo Shinan Koho    1971-2013     Toroku Jitsuyo Shinan Koho     1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-136109 A  (Toyota Motor Corp.),<br>18 June 2009 (18.06.2009),<br>paragraphs [0018], [0034] to [0037], [0053] to<br>[0058]; fig. 6<br>& US 2010/0217485 A1      & EP 2219278 A1<br>& WO 2009/069481 A1       & CN 101878576 A | 1-10 |
| A | JP 2009-022061 A  (Toyota Motor Corp.),<br>29 January 2009 (29.01.2009),<br>paragraph [0062]; fig. 7, 8<br>(Family: none) | 1-10 |
| A | WO 2012/039055 A1  (Toshiba Corp.),<br>29 March 2012 (29.03.2012),<br>paragraphs [0010] to [0025]; fig. 1 to 12<br>& US 2013/0009607 A1 | 1-10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 May, 2013 (24.05.13) | 04 June, 2013 (04.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/061357 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2012-039822 A  (Nittetsu Elex Co., Ltd.), 23 February 2012 (23.02.2012), paragraphs [0037] to [0039]; fig. 1 (Family: none) | 2,3 |
| A | JP 2011-239662 A  (Panasonic Electric Works Co., Ltd.), 24 November 2011 (24.11.2011), paragraphs [0076] to [0083]; fig. 12 & WO 2011/128733 A1     & CN 102918740 A & KR 10-2013-0001269 A | 3,4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006074868 A
- JP 2011024335 A
- JP 2012150453 A